# EUROPEAN PATENT APPLICATION

(11) **EP 2 739 054 A1**
(43) Date of publication of application: **04.06.2014**
(21) Application number: 12816829.1
(22) Date of filing: 11.07.2012
(51) Int. Cl.: H04N 7/32

(54) **ENCODING DEVICE AND ENCODING METHOD, AND DECODING DEVICE AND DECODING METHOD**

(30) Priority: 27.07.2011 JP 2011164422
(71) Applicant: Sony Corporation, Tokyo 108-0075 (JP)
(72) Inventor: ICHIKI Shoji, Tokyo 108-0075 (JP); TSUKAGOSHI Ikuo, Tokyo 108-0075 (JP)
(74) Representative: Horner, David Richard
(86) International application number: PCT/JP2012/067716
(87) International publication number: WO 2013/015116

(57) **Abstract**

The present technique relates to an encoding device and an encoding method, and a decoding device and a decoding method that can encode and decode high-frame-rate images by a method having compatibility with a method for conventional low-frame-rate images. A base encoder encodes conventional-frame-rate image data in high-frame-rate data as base views. A non-base encoder encodes the image data other than the base views in the high-frame-rate data as non-base views by referring to the base views. An SEI generation unit generates display control information. An antenna transmits the encoded base views, the encoded non-base views, and the display control information. The present technique can be applied to TV transmitters that transmit TV broadcasts, for example.

## Description

### TECHNICAL FIELD

The present technique relates to encoding devices and encoding methods, and decoding devices and decoding methods, and more particularly to an encoding device and an encoding method, and a decoding device and a decoding method that can encode and decode high-frame-rate images by a method having compatibility with a method for conventional low-frame-rate images.

### BACKGROUND ART

Digital broadcasting is being spread in various countries, and next-generation technologies involving high-frame-rate images and 3D images are now being actively introduced in digital broadcasting. In Europe, for example, broadcasts of images (hereinafter referred to as 50p/60p images) formed with 1920 x 1080 at 50p/60p, which is a frame rate twice higher than the conventional frame rate, have been standardized in the early stage.

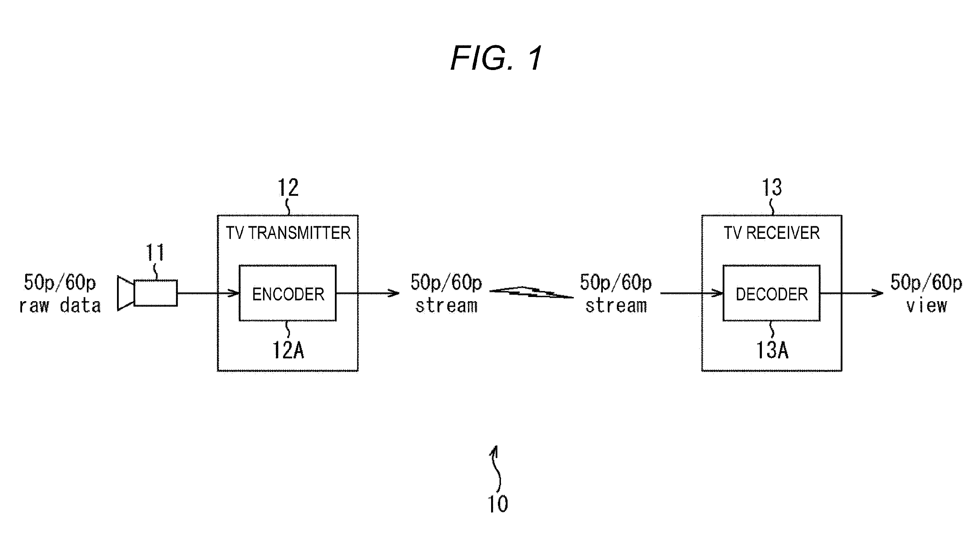

Fig. 1 is a block diagram showing an example of a TV (Television) transmission/reception system that is realized by this standard.

The TV transmission/reception system 10 shown in Fig. 1 includes a camera 11, a TV transmitter 12, and a TV receiver 13.

The camera 11 of the TV transmission/reception system 10 captures a 50p/60p image, for example, and supplies the image data (50p/60p raw data) of the 50p/60p image obtained as a result to the TV transmitter 12.

The TV transmitter 12 includes an encoder 12A. The encoder 12A encodes the image data of the 50p/60p image supplied from the camera 11. The TV transmitter 12 transmits the resultant bit stream (a 50p/60p stream) containing the encoded data of the 50p/60p image by using radio waves.

The TV receiver 13 includes a decoder 13A. The TV receiver 13 receives the bit stream of the 50p/60p image transmitted from the TV transmitter 12 using radio waves. The decoder 13A decodes the encoded data contained in the bit stream of the 50p/60p image by a method compatible with the AVC method, and obtains the image data of the 50p/60p image. Based on the image data of the 50p/60p image, the TV receiver 13 displays the 50p/60p image (a 50p/60p view).

So as to encode and decode 50p/60p images, the above described TV transmission/reception system 10 performs encoding and decoding by level 4.2 or the like of MPEG4 (Moving Picture Experts Group phase 4)/AVC (Advanced Video Coding).

However, the conventional broadcasting standards define the upper limit of encoding methods as level 4.0 of MPEG4/AVC. Therefore, most conventional TV receivers have a decoding ability equivalent to or lower than level 4.0 of MPEG4/AVC. In view of this, it is difficult for a conventional TV receiver to decode images with higher specs than images formed with 1920 x 1080 pixels at 50i/60i or 25p/30p. As a result, when a conventional TV receiver receives a broadcast of 50p/60p images, a displayed image might be disturbed, an image to be displayed might be skipped, or some images might not be displayed.

To counter such problems, broadcasts of 50p/60p images having compatibility with conventional broadcasts can be performed in the following manner. A TV transmitter can encode and transmit 50p/60p images by SVC (Scalable Video Coding), which is an expanded standard of MEPG4/AVC, and a conventional TV receiver can decode and display only the images formed with 1920 x 1080 pixels at 50i/60i or 25p/30p among the 50p/60p images. However, there are few TV transmission/reception systems that employ the technique of SVC, and introduction of the technique of SVC into a TV transmission/reception system solely for compatibility with broadcasts of 50p/60p images will result in a cost increase.

Also, simultaneous broadcasting may be performed to transmit a broadcast of 50p/60p images and a broadcast of 50.i/60i images or 25p/30p images simultaneously in one broadcast band. In this case, however, two broadcasts need to be transmitted in one broadcast band, and therefore, the bit rate of each of the broadcasts needs to be lowered. As a result, the image quality of each of the broadcasts becomes poorer particularly in terrestrial broadcasting using a narrow broadcast band. Furthermore, viewers can view broadcasts by simultaneous broadcasting even with a conventional TV receiver that is not compatible with broadcasts of 50p/60p images. As a result, viewers might be confused, viewing disturbed images of broadcasts of 50p/60p images.

For the above reason, broadcasts of 50p/60p images cannot be commenced in practice.

In Europe, broadcasts of half-HD (High Definition) 3D images that are multiplexed by the side-by-side method and are encoded by MPEG4/AVC have also been standardized. A system that broadcasts such 3D images is disclosed in Patent Document 1, for example. The side-by-side method is a method of arranging images for the left eye and images for the right eye having the resolution halved in the horizontal direction in the left half and the right half of the screen.

Furthermore, standardization of broadcasts of full-HD 3D images is now beginning to be considered in Europe.

As a method for realizing broadcasts of full-HD 3D images, there is a method of using the MVC (Multiview Video Coding) method used in 3D-BD (Blu-ray (a registered trade name) Disc) as an encoding method. In a case where this method is actually used, a TV receiver compatible with broadcasts of full-HD 3D images includes a decoder that can perform decoding by a method compatible with the MVC method. The MVC method is an expanded standard of MPEG4/AVC, and is compatible with 50p/60p images.

Also, recording of full-HD 3D images encoded as personal content by the MVC method is now being considered for video cameras and the like, and those 3D images might be reproduced by a TV receiver.

In view of the above, there is a high possibility that a TV receiver includes a decoder that can perform decoding by a method compatible with the MVC method.

As a method for realizing broadcasts of full-HD 3D images, there is also a method of encoding images for the left eye as odd-numbered fields and images for the right eye as even-numbered fields (see Patent Document 2, for example).

### CITATION LIST

### PATENT DOCUMENTS

Patent Document 1: JP 2011-109397 A
Patent Document 2: JP 7-123447 A

### SUMMARY OF THE INVENTION

### PROBLEMS TO BE SOLVED BY THE INVENTION

As described above, when a conventional TV receiver receives a broadcast of 50p/60p images, a displayed image might be disturbed, an image to be displayed might be skipped, or some images might not be displayed.

In view of this, there is a demand for realization of broadcasts of 50p/60p images having compatibility with conventional broadcasts by encoding broadcasts of 50p/60p images by a method having compatibility with the conventional broadcasts. That is, there is a demand for encoding and decoding of high-frame-rate images by a method having compatibility with a method for conventional low-frame-rate images.

The present technique has been developed in view of those circumstances, and is to encode and decode high-frame-rate images by methods having compatibility with a method for conventional low-frame-rate images.

### SOLUTIONS TO PROBLEMS

An encoding device of a first aspect of the present technique includes: an encoding unit that encodes images having a predetermined frame rate among images having a first frame rate as base images, and encodes the images other than the base images among the images having the first frame rate as non-base images by referring to the base images; a generation unit that generates display control information to be used to display the base images and the non-base images as images having a second frame rate equal to or lower than the first frame rate; and a transmission unit that transmits the base images and the non-base images encoded by the encoding unit, and the display control information generated by the generation unit.

An encoding method of the first aspect of the present invention is compatible with the encoding device of the first aspect of the present technique.

In the first aspect of the present technique, images having a predetermined frame rate among images having a first frame rate are encoded as base images, the images other than the base images among the images having the first frame rate are encoded as non-base images by referring to the base images, display control information to be used to display the base images and the non-base images as images having a second frame rate equal to or lower than the first frame rate is generated, and the encoded base images and non-base images and the generated display control information are transmitted.

A decoding device of a second aspect of the present technique includes: a reception unit that receives base encoded data obtained as a result of encoding of images having a predetermined frame rate as base images among images having a first frame rate, non-base encoded data obtained as a result of encoding of the images other than the base images as non-base images by referring to the base images, and display control information to be used to display the base images and the non-base images as images having a second frame rate equal to or lower than the first frame rate; and a decoding unit that generates the base images by decoding the base encoded data received by the reception unit, and decodes the non-base encoded data received by the reception unit by using the display control information received by the reception unit and referring to the generated base images.

A decoding method of the second aspect of the present technique is compatible with the decoding device of the second aspect of the present technique.

In the second aspect of the present technique, base encoded data obtained as a result of encoding of images having a predetermined frame rate as base images among images having a first frame rate, non-base encoded data obtained as a result of encoding of the images other than the base images as non-base images by referring to the base images, and display control information to be used to display the base images and the non-base images as images having a second frame rate equal to or lower than the first frame rate are received. The base images are generated by decoding the received base encoded data, and the received non-base encoded data is decoded by using the received display control information and referring to the generated base images.

### EFFECTS OF THE INVENTION

According to the first aspect of the present technique, high-frame-rate images can be encoded by a method having compatibility with a method for conventional low-frame-rate images.

According to the second aspect of the present technique, high-frame-rate images encoded by a method having compatibility with a method for conventional low-frame-rate images can be decoded.

### BRIEF DESCRIPTION OF DRAWINGS

Fig. 1 is a block diagram showing an example of a TV transmission/reception system.
Fig. 2 is a block diagram showing an example of a TV transmission/reception system that transmits and receives broadcasts of full-HD 3D images.
Fig. 3 is a diagram for explaining the outline of an embodiment of a TV transmission/reception system to which the present technique is applied.
Fig. 4 is a diagram showing a specific example structure of the TV transmitter shown in Fig. 3.
Fig. 5 is a diagram showing example descriptors in the SEI of display control information.
Fig. 6 is a diagram showing examples of format conversion types.
Fig. 7 is a diagram showing examples of interpolation AU flags.
Fig. 8 is a diagram showing examples of base view non-display flags.
Fig. 9 is a diagram showing examples of base view coding unit flags.
Fig. 10 is a diagram showing example descriptors of display control information flags.
Fig. 11 is a flowchart for explaining a transmission process to be performed by the TV transmitter shown in Fig. 4.
Fig. 12 is a block diagram showing a specific example structure of the TV receiver shown in Fig. 3.
Fig. 13 is a block diagram showing a specific example structure of the TV receiver shown in Fig. 3.
Fig. 14 is a diagram for explaining processing to be performed by the TV receiver.
Fig. 15 is a diagram for explaining processing to be performed by the TV receiver.
Fig. 16 is a diagram for explaining processing to be performed by the TV receiver.
Fig. 17 is a diagram for explaining processing to be performed by the TV receiver.
Fig. 18 is a flowchart for explaining a reception process to be performed by the TV receiver 53.
Fig. 19 is a flowchart for specifically explaining the quad process shown in Fig. 18.
Fi.g. 20 is a flowchart for specifically explaining the double interlace process shown in Fig. 18.
Fig. 21 is a flowchart for explaining the reception process to be performed by the TV receiver 54.
Fig. 22 is a diagram showing an example structure of an embodiment of a computer.

### MODES FOR CARRYING OUT THE INVENTION

### [Premise of the Present Technique]

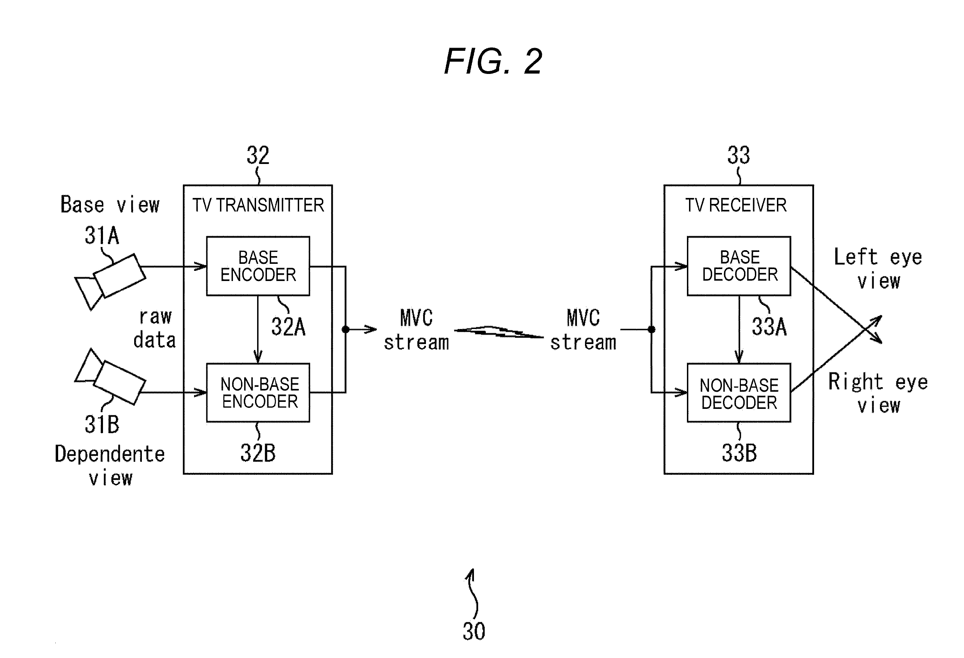

Fig. 2 is a block diagram showing an example of a TV transmission/reception system that transmits and receives broadcasts of full-HD 3D images.

The TV transmission/reception system 30 shown in Fig. 2 includes cameras 31A and 31B, a TV transmitter 32, and a TV receiver 33.

The camera 31A captures images for the left eye among 3D images, and supplies the left-eye image data obtained as a result to the TV transmitter 32. The camera 31B captures images for the right eye among the 3D image, and supplies the right-eye image data obtained as a result to the TV transmitter 32.

The TV transmitter 32 includes a base encoder 32A and a non-base encoder 32B. The base encoder 32A encodes the left-eye image data supplied from the camera 31A as base views by the AVC method. The base encoder 32A also decodes the encoded base views, and supplies the decoded base views to the non-base encoder 32B.

By referring to the decoded base views and the like supplied from the base encoder 32A, the non-base encoder 32B encodes the right-eye image data supplied from the camera 31B as non-base views by the MVC method. Using radio waves, the TV transmitter 32 transmits the encoded data obtained as a result of the encoding by the base encoder 32A, and an MVC stream containing the encoded data obtained as a result of the encoding by the non-base encoder 32B.

The TV receiver 33 includes a base decoder 33A and a non-base decoder 33B. The TV receiver 33 receives the MVC stream transmitted from the TV transmitter 32 using radio waves. The base decoder 33A decodes the encoded data of the base views in the MVC stream by a method compatible with the AVC method. The base decoder 33A supplies the left-eye image data as the base views obtained as a result of the decoding, to the non-base decoder 33B.

By referring to the base views and the like supplied from the base decoder 33A, the non-base decoder 33B decodes the encoded data of the non-base views in the MVC stream by a method compatible with the MVC method. By doing so, the non-base decoder 33B obtains the right-eye image data. The TV receiver 33 displays the images for the left eye based on the left-eye image data, and displays the images for the right eye based on the right-eye image data. Using predetermined glasses or the like, the viewer sees the images for the left eye only with the left eye, and sees the images for the right eye only with the right eye. In this manner, the viewer performs stereoscopic viewing.

A TV receiver that is compatible with conventional broadcasts but not compatible with broadcasts of full-HD 3D images includes a decoder that performs decoding by a method compatible with the AVC method, for example. Accordingly, such a TV receiver can decode the base view stream in an MVC stream transmitted from the TV transmitter 32. Therefore, the MVC method that is an encoding method for broadcasts of full-HD 3D images to be transmitted by the TV transmitter 32 is considered to have compatibility with the AVC method that is an encoding method for conventional broadcasts.

In view of this, the present technique secures compatibility with broadcasts of 50p/60p images and conventional broadcasts by encoding 50p/60p images by the MVC method. In this manner, compatibility with broadcasts of 50p/60p images and conventional broadcasts can be secured, without degradation in image quality as in a case where simultaneous broadcasting is performed. Since the technique of the AVC method is implemented in TV transmission/reception systems compatible with conventional broadcasts, it is possible to secure compatibility with broadcasts of 50p/60p images and conventional broadcasts while restraining increases in costs of the TV transmission/reception systems. Further, in a case where the MVC method is employed as the encoding method for broadcasts of full-HD 3D images, only a very small number of changes need to be made to the TV transmission/reception systems compatible with broadcasts of full-HD 3D images.

### [Explanation of the Outline of an Embodiment of a TV Transmission/Reception System to Which the Present Technique is Applied]

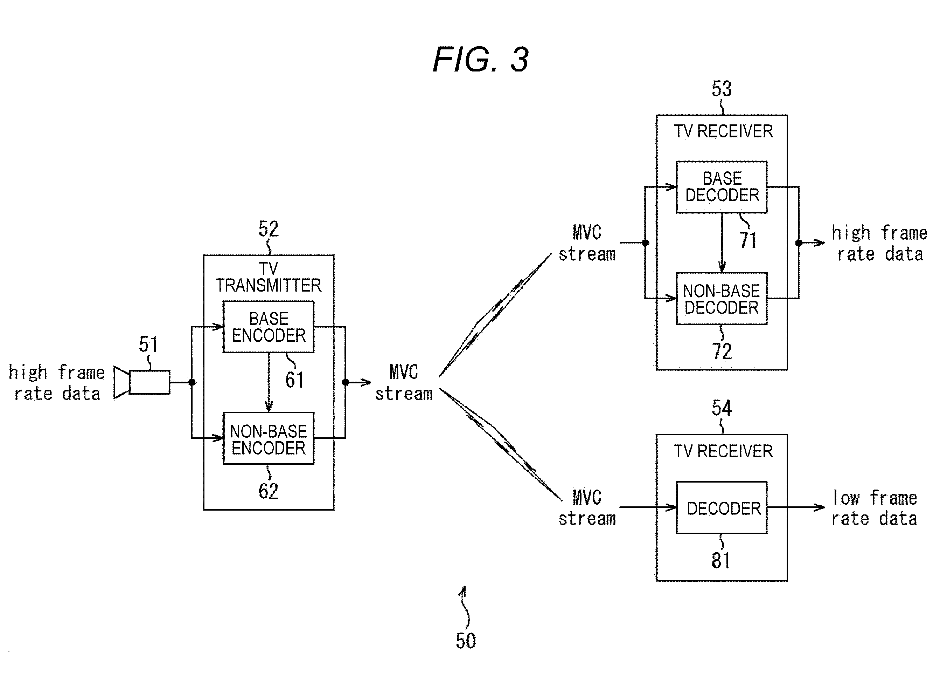

Fig. 3 is a diagram for explaining the outline of an embodiment of a TV transmission/reception system to which the present technique is applied.

The TV transmission/reception system 50 shown in Fig. 3 includes a camera 51, a TV transmitter 52, a TV receiver 53, and a TV receiver 54.

The camera 51 of the TV transmission/reception system 50 performs imaging at a high frame rate that is N (N being an integer of 2 or greater) times higher than a frame rate (hereinafter referred to as the conventional frame rate) at which processing can be performed by a conventional TV receiver, and obtained the resultant image data as high-frame-rate data. Here, the conventional frame rate is 50i/60i or 25p/30p. The camera 51 supplies the high-frame-rate data to the TV transmitter 52.

The TV transmitter 52 functions as an encoding device, and includes a base encoder 61 and a non-base encoder 62. The base encoder 61 encodes the image data having the conventional frame rate in the high-frame-rate data supplied from the camera 51, as base views by the AVC method. The base encoder 61 also decodes the encoded base views, and supplies the decoded base views to the non-base encoder 62.

The non-base encoder 62 encodes the image data other than the base views in the high-frame-rate data as non-base views by the MVC method. At this point, the non-base encoder 62 uses the decoded base views and the like supplied from the base encoder 61 as reference images.

Using radio waves, the TV transmitter 52 transmits the base encoded data obtained as a result of the encoding by the base encoder 61, and an MVC stream containing the non-base encoded data obtained as a result of the encoding by the non-base encoder 62.

The TV receiver 53 is a TV receiver compatible with broadcasts of 50p/60p images, functions as a decoding device, and includes a base decoder 71 and a non-base decoder 72. The TV receiver 53 receives the MVC stream transmitted from the TV transmitter 52 using radio waves. The base decoder 71 decodes the base view encoded data contained in the MVC stream by a method compatible with the AVC method. The base decoder 71 supplies the base views obtained as a result of the decoding to the non-base decoder 72.

The non-base decoder 72 decodes at least part of the non-base view encoded data contained in the MVC stream by a method compatible with the MVC method. At this point, the non-base decoder 72 refers to the base views and the like supplied from the base decoder 71.

Based on the base views obtained as a result of the encoding by the base decoder 71 and the non-base views obtained as a result of the encoding by the non-base decoder 72, the TV receiver 53 displays images at a frame rate that is M (M being an integer not smaller than 2 and not greater than N) times higher than the conventional frame rate. Here, the maximum value of M is a value depending on the processing capacity of the TV receiver 53.

The TV receiver 54 is a conventional TV receiver not compatible with broadcasts of 50p/60p images, functions as a decoding device, and includes a decoder 81. The TV receiver 54 receives the MVC stream transmitted from the TV transmitter 52 using radio waves. Like the base decoder 71, the decoder 81 decodes the base view encoded data contained in the MVC stream by a method compatible with the AVC method. Based on the conventional-frame-rate image data that is the base views obtained as a result of the decoding by the base decoder 71, the TV receiver 54 displays images having the conventional frame rate.

### [Example Structure of the TV Transmitter]

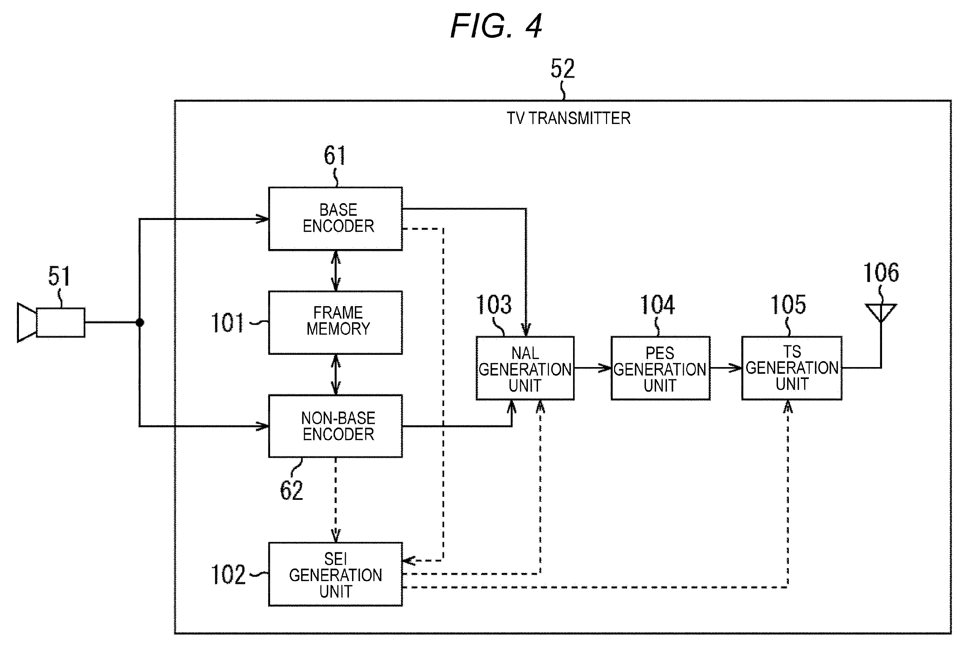

Fig. 4 is a diagram showing a specific example structure of the TV transmitter 52 shown in Fig. 3.

As shown in Fig. 4, the TV transmitter 52 includes not only the base encoder 61 and the non-base encoder 62, but also a frame memory 101, an SEI (Supplemental Enhancement Information) generation unit 102, an NAL (Network Abstraction Layer) generation unit 103, a PES (Packetized Elementary Stream) generation unit 104, a TS (Transport Stream) generation unit 105, and an antenna 106.

As described above, the base encoder 61 of the TV transmitter 52 encodes the image data having the conventional frame rate in high-frame-rate data supplied from the camera 51, as base views by the AVC method. At this point, the base encoder 61 uses the base views that are stored in the frame memory 101 and have been encoded and decoded as reference images. The base encoder 61 also decodes the encoded base views, and supplies the decoded base views to the frame memory 101.

The base encoder 61 also supplies the encoded base views as base encoded data to the NAL generation unit 103. Further, the base encoder 61 supplies the view ID of each current base view being encoded and a coding unit to the SEI generation unit 102. Here, a view ID is a unique ID assigned to each piece of image data in order of imaging.

As described above, the non-base encoder 62 encodes the image data other than the base views in the high-frame-rate data as non-base views by the MVC method. At this point, the non-base encoder 62 uses the decoded base views or non-base views that are stored in the frame memory 101 as reference images. The non-base encoder 62 also decodes the encoded non-base views, and supplies the decoded non-base views to the frame memory 101.

The non-base encoder 62 also supplies the encoded non-base views as non-base encoded data to the NAL generation unit 103. Further, the non-base encoder 62 supplies the view ID of each current non-base view being encoded to the SEI generation unit 102.

The frame memory 101 holds the decoded base views supplied from the base encoder 61. The frame memory 101 also holds the decoded non-base views supplied from the non-base encoder 62.

The SEI generation unit 102 functions as a generation unit, and generates display control information based on the view IDs and coding unit supplied from the base encoder 61 and the view IDs and the like supplied from the non-base encoder 62. The display control information is the information to be used when an image corresponding to at least part of the base views and the non-base views is displayed as an image having a frame rate that is M times higher than the conventional frame rate in the TV receiver 53.

The SEI generation unit 102 generates not only the SEI and the like of the display control information as SEI for the MVC method, but also SEI for the AVC method, and supplies the SEI to the NAL generation unit 103. The SEI generation unit 102 also generates a display control information flag indicating whether the MVC stream contains display control information or whether the SEI for the MVC method contains the SEI of the display control information, and supplies the display control information flag to the TS generation unit 105.

The NAL generation unit 103 adds NAL headers to the base encoded data supplied from the base encoder 61, the non-base encoded data supplied from the non-base encoder 62, and the SEI and the like supplied from the SEI generation unit 102. By doing so, the NAL generation unit 103 generates NAL units of the base encoded data, the non-base encoded data, and the SEI, and the like. The NAL generation unit 103 functions as a transmission data generation unit, generates access units (AUs) from the generated NAL units, and supplies the AUs to the PES generation unit 104.

The PES generation unit 104 packetizes the AUs supplied from the NAL generation unit 103 into PES packets, and supplies the resultant PES packets to the TS generation unit 105.

The TS generation unit 105 packetizes the PES packets supplied from the PES generation unit 104, the data containing the display control information flag supplied from the SEI generation unit 102, and the like, to generate TS packets. The TS generation unit 105 multiplexes the TS packets, to generate a TS. The TS generation unit 105 supplies the generated TS as an MVC stream to the antenna 106.

The antenna 106 functions as a transmission unit, and transmits the MVC stream supplied from the TS generation unit 105 to the TV receiver 53, using radio waves.

### [Example of SEI of Display Control Information]

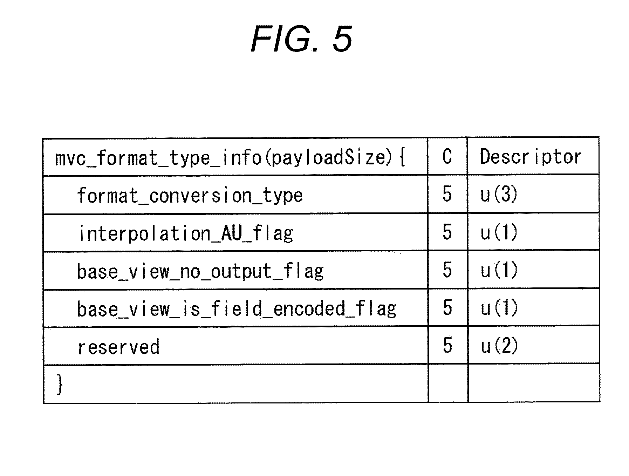

Fig. 5 is a diagram showing example descriptions in the SEI of display control information.

As shown in Fig. 5, a format conversion type (format_conversion_type), an interpolation AU flag (interpolation_AU_flag), a base view non-display flag (base_view_no_output_flag), a base view coding unit flag (base_view_is_field_encoded_flag), and a reserved area for future extensions (reserved) are arranged in the SEI (mvc_format_type_info) of display control information.

The format conversion type is the information indicating the type of a corresponding image to be encoded, and is generated based on a user input or the like. The interpolation AU flag is the pair information indicating whether the corresponding non-base view is the image data of a field or a frame forming the image data of the same frame as the base view. The interpolation AU flag is generated based on the format conversion type and the view IDs from the base encoder 61 and the non-base encoder 62.

The base view non-display flag is the information indicating whether the base view forming the image data of the same frame as the corresponding non-base view is to be displayed when a 100i/120i image is displayed, and is generated based on the format conversion type. The base view coding unit flag is the coding unit information indicating whether the corresponding base views have been encoded by the frame or whether the corresponding base views have been encoded by the field, and is generated based on the coding unit supplied from the base encoder 61.

### [Examples of Format Conversion Types]

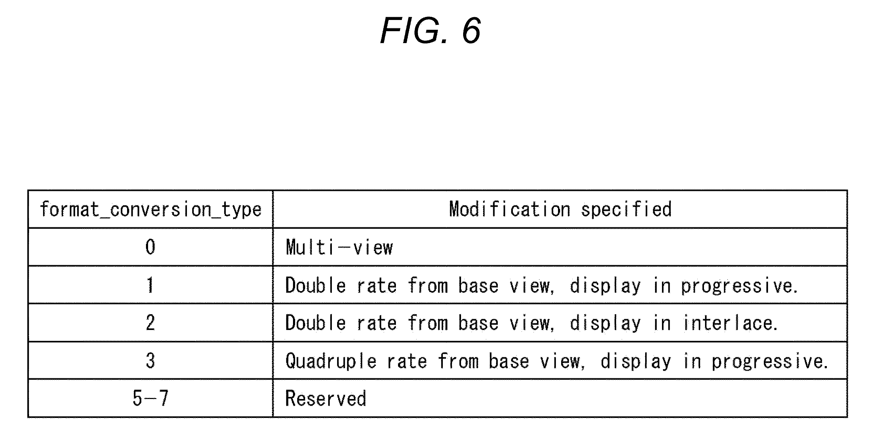

Fig. 6 is a diagram showing examples of format conversion types that can be put in the SEI of display control information.

In the examples shown in Fig. 6, format conversion types are represented by values of 0 through 3. The format conversion type "0" indicates that the corresponding image to be encoded is a 3D image. The format conversion type "1" indicates that N of the corresponding image to be encoded is 2, and the image to be encoded is a progressive image. The format conversion type "2" indicates that N of the corresponding image to be encoded is 2, and the image to be encoded is an interlaced image. The format conversion type "3" indicates that N of the corresponding image to be encoded is 4, and the image to be encoded is a progressive image.

The format conversion types "5" through "7" are reserved areas for future extensions.

### [Examples of Interpolation AU Flags]

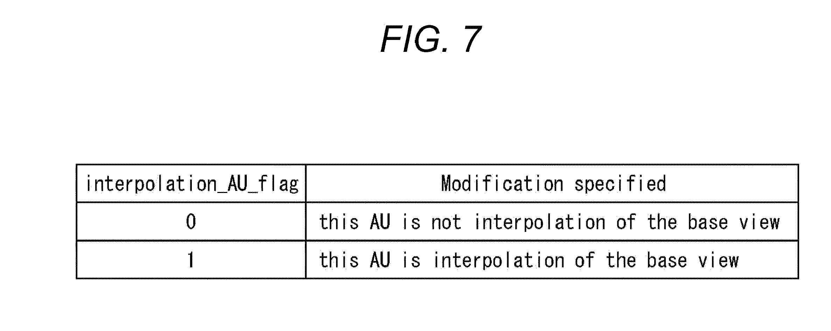

Fig. 7 is a diagram showing examples of interpolation AU flags that can be put in the SEI of display control information.

As shown in Fig. 7, interpolation AU flags are 0 or 1. The interpolation AU flag "0" indicates that the corresponding non-base view is neither the image data of the field nor the image data of the frame that forms the image data of the same frame as the base view. Meanwhile, the interpolation AU flag "1" indicates that the corresponding non-base view is the image data of the field or is the image data of the frame that forms the image data of the same frame as the base view.

### [Examples of Base View Non-Display Flags]

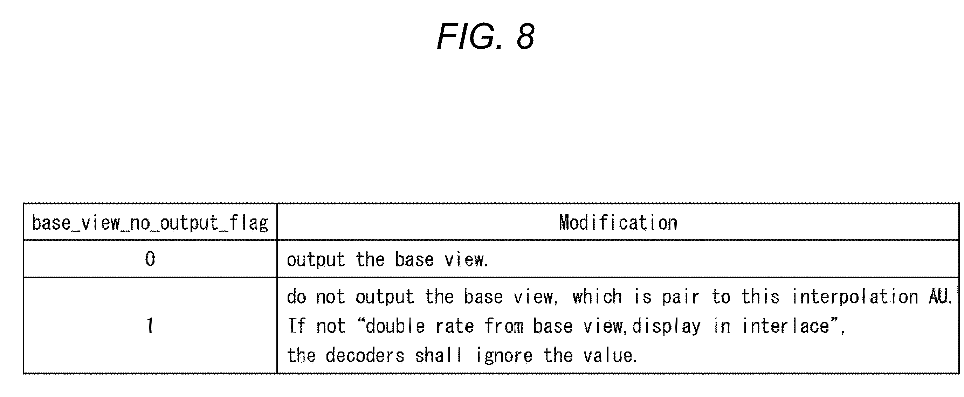

Fig. 8 is a diagram showing examples of base view non-display flags that can be put in the SEI of display control information.

As shown in Fig. 8, base view non-display flags are 0 or 1. The base view non-display flag "0" indicates that the base view that forms the image data of the same frame as the corresponding non-base view is to be displayed when a 100i/120i image is displayed. Meanwhile, the base view non-display flag "1" indicates that the base view forms the image data of the same frame as the corresponding non-base view is not to be displayed when a 100i/120i image is displayed, when a 100i/120i image is displayed. In a case where a 100i/120i image cannot be displayed based on high-frame-rate data, the base view non-display flag may have any value, but it is "0" in this embodiment.

### [Examples of Base View Coding Unit Flags]

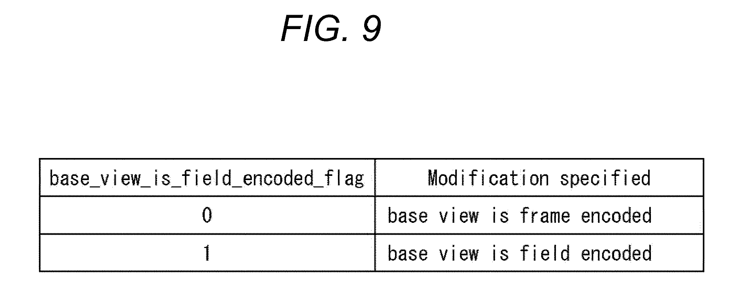

Fig. 9 is a diagram showing examples of base view coding unit flags that can be put in the SEI of display control information.

As shown in Fig. 9, base view coding unit flags are 0 or 1. The base view coding unit flag "0" indicates that the corresponding base views have been encoded by the frame, and the base view coding unit flag "1" indicates that the corresponding base views have been encoded by the field.

### [Example Descriptors of Display Control Information Flags]

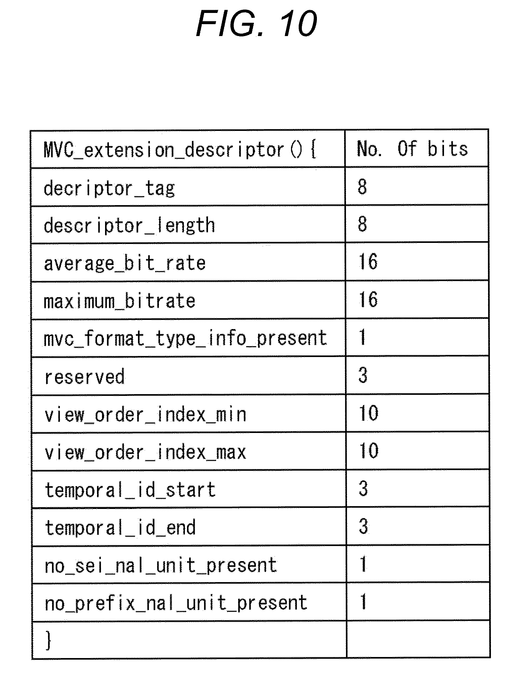

Fig. 10 is a diagram showing example descriptors of display control information flags.

As shown in Fig. 10, a display control information flag (mvc_format_type_info_present) is written in a 1-bit area among a 4-bit reserved area of an MVC extension descriptor (MVC_extension_descriptor) in a TS packet such as a PMT (Program Map Table) or the like. The display control information flag is "1" when indicating that display control information is contained in the MVC stream, and is "0" when indicating that display control information is not contained in the MVC stream.

Since a display control information flag is contained in a TS packet as described above, the TV receiver 53 can determine whether display control information is contained in an MVC stream prior to decoding.

### [Description of Processing by the TV transmitter]

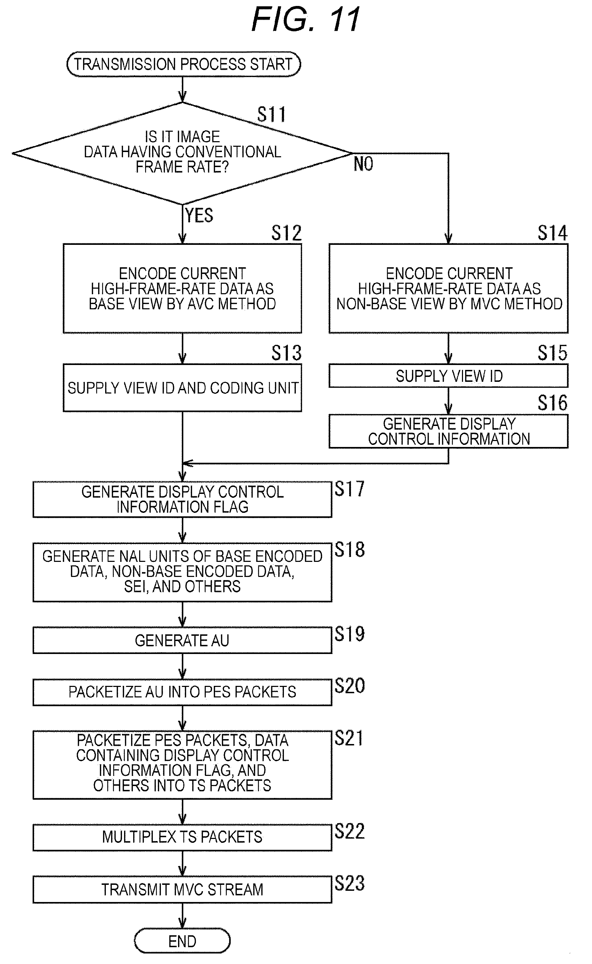

Fig. 11 is a flowchart for explaining a transmission process to be performed by the TV transmitter 52 shown in Fig. 4. This transmission process is started when high-frame-rate data is supplied from the camera 51, for example.

The processing in steps S11 through S17 in Fig. 11 is performed for each coding unit.

In step S11, the base encoder 61 of the TV transmitter 52 determines whether the current high-frame-rate data to be processed is image data having the conventional frame rate.

If the current high-frame-rate data is determined to be image data having the conventional frame rate in step S11, the base encoder 61 in step S12 encodes the current high-frame-rate data as a base view by the AVC method. At this point, the base encoder 61 uses the base view that is stored in the frame memory 101 and has been encoded and decoded as a reference image. The base encoder 61 also decodes the encoded base view, and supplies the decoded base view to the frame memory 101. The base encoder 61 also supplies the encoded base view as base encoded data to the NAL generation unit 103.

In step S13, the base encoder 61 supplies the view ID and the coding unit of the current base view to be encoded to the SEI generation unit 102, and the process moves on to step S17.

If the current high-frame-rate data is determined not to be image data having the conventional frame rate in step S11, on the other hand, the process moves on to step S14.

In step S14, the non-base encoder 62 encodes the current high-frame-rate data as a non-base view by the MVC method. At this point, the non-base encoder 62 uses the base view or non-base view that is stored in the frame memory 101 and has been encoded and decoded, as a reference image. The non-base encoder 62 also decodes the encoded non-base view, and supplies the decoded non-base view to the frame memory 101. Further, the non-base encoder 62 supplies the encoded non-base view as non-base encoded data to the NAL generation unit 103.

In step S15, the non-base encoder 62 supplies the view ID of the current non-base view to be encoded to the SEI generation unit 102.

In step S16, the SEI generation unit 102 generates display control information based on the view ID and coding unit supplied from the base encoder 61 and the view ID and the like supplied from the non-base encoder 62. The SEI generation unit 102 generates not only the SEI and the like of the display control information as the SEI for the MVC method, but also the SEI for the AVC method, and supplies the SEI to the NAL generation unit 103. The process then moves on to step S17.

In step S17, the SEI generation unit 102 generates a display control information flag, and supplies the display control information flag to the TS generation unit 105.

In step S18, the NAL generation unit 103 adds NAL headers to the base encoded data from the base encoder 61, the non-base encoded data from the non-base encoder 62, and the SEI and the like from the SEI generation unit 102, to generate NAL units of the base encoded data, the non-base encoded data, the SEI, and the like.

In step S19, the NAL generation unit 103 generates AUs from the generated NAL units, and supplies the AUs to the PES generation unit 104.

In step S20, the PES generation unit 104 packetizes the AUs supplied from the NAL generation unit 103 into PES packets, and supplies the obtained PES packets to the TS generation unit 105.

In step S21, the TS generation unit 105 generates TS packets by packetizing the PES packets supplied from the PES generation unit 104, the data containing the display control information flag supplied from the SEI generation unit 102, and the like.

In step S22, the TS generation unit 105 multiplexes the generated TS packets, and generates a TS as multiplexed data.

In step S23, the TS generation unit 105 transmits the generated TS as an MVC stream from the antenna 106 to the TV receiver 53, using radio waves. The process then comes to an end.

As described above, the TV transmitter 52 encodes the conventional-frame-rate image as base views among images having a frame rate N times higher than the conventional frame rate by the AVC method, and encodes the images other than the base views as non-base views by the MVC method. In this manner, images having a frame rate that is N times higher than the conventional frame rate can be encoded by a method having compatibility with a method for conventional-frame-rate image. As a result, the base views in the MVC stream transmitted from the TV transmitter 52 can be decoded even in the conventional TV receiver 54 that is not compatible with broadcasts of 50p/60p images.

The TV transmitter 52 simply has to transmit the encoded data of images having a frame rate that is N times higher than the conventional frame rate. Accordingly, a higher band usage efficiency is achieved compared with that in a case where conventional-frame-rate images and images having the frame rate N times higher than the conventional frame rate are transmitted separately in simultaneous broadcasting. As a result, degradation in image quality can be prevented without the need to lower the bit rate. Also, the TV transmitter 52 does not need to generate both images having the conventional frame rate and images having the frame rate N times higher than the conventional frame rate. Accordingly, processing costs can be lowered.

Furthermore, since the technique of the AVC method is introduced in TV transmission/reception systems compatible with conventional broadcasts, increases in costs of TV transmission/reception systems can be restrained. Further, in a case where the MVC method is employed as the encoding method for broadcasts of full-HD 3D images, only a very small number of changes need to be made to the TV transmission/reception systems compatible with broadcasts of full-HD 3D images.

Also, since the TV transmitter 52 transmits display control information, the TV receiver 53 can perform decoding of base views and non-base views, and perform display control based on the display control information. Thus, images having a frame rate that is M times higher than the conventional frame rate can be displayed.

### [Specific Example Structure of the TV Receiver 53]

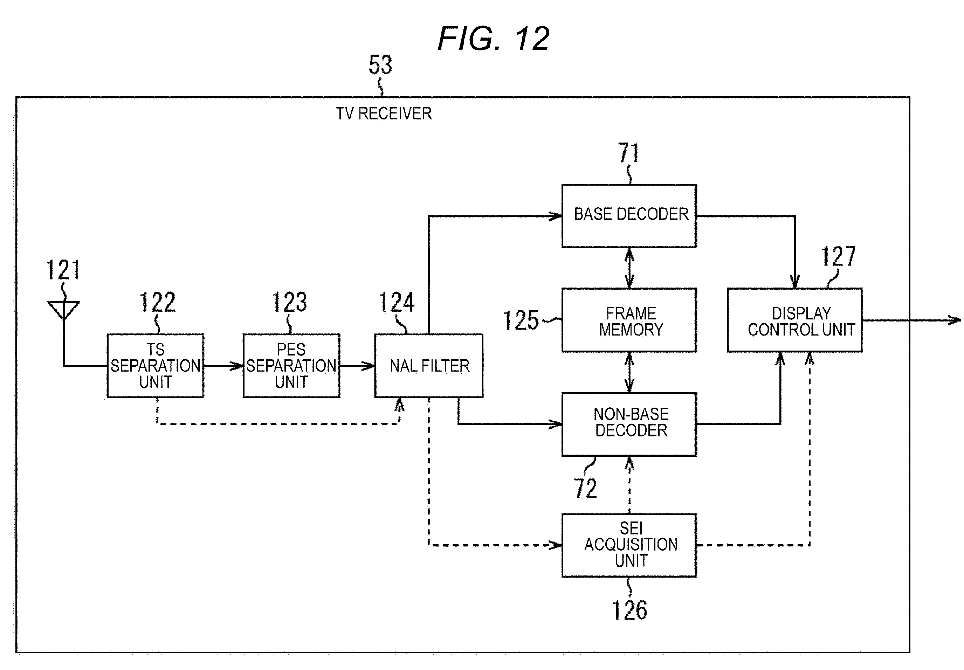

Fig. 12 is a block diagram showing a specific example structure of the TV receiver 53 shown in Fig. 3.

The TV receiver 53 shown in Fig. 12 includes not only the base decoder 71 and the non-base decoder 72, but also an antenna 121, a TS separation unit 122, a PES separation unit 123, an NAL filter 124, a frame memory 125, an SEI acquisition unit 126, and a display control unit 127.

The antenna 121 functions as a reception unit, receives an MVC stream transmitted from the antenna 106 of the TV transmitter 52 (Fig. 4) using radio waves, and supplies the MVC stream to the TS separation unit 122.

The TS separation unit 122 separates the MVC stream supplied from the antenna 121 into TS packets. The TS separation unit 122 supplies the display control information flag contained in the separated TS packets to the NAL filter 124. The TS separation unit 122 supplies the PES packets contained in the separated TS packets to the PES separation unit 123.

The PES separation unit 123 separates the PES packets supplied from the TS separation unit 122 into NAL units. The PES separation unit 123 supplies the separated NAL units to the NAL filter 124.

The NAL filter 124 functions an extraction unit, and extracts the base view encoded data, the non-base view encoded data, the display control information, and the like from the NAL units supplied from the PES separation unit 123 based on the display control information flag supplied from the TS separation unit 122.

Specifically, the NAL filter 124 refers to the NAL headers contained in the NAL units, and separates the NAL units of base view encoded data, non-base encoded data, SEI, and the like from one another. The NAL filter 124 then extracts the base view encoded data from the NAL units of the base view encoded data, and extracts the non-base view encoded data from the NAL units of the non-base view encoded data. The NAL filter 124 also extracts display control information from the SEI for the MVC method when the display control information flag indicates that the display control information is contained in the MVC stream.

The NAL filter 124 then supplies the extracted base view encoded data to the base decoder 71, and supplies the non-base view encoded data to the non-base decoder 72. The NAL filter 124 also supplies the extracted display control information to the SEI acquisition unit 126.

As described above, the base decoder 71 decodes the base view encoded data by a method compatible with the AVC method. At this point, the base decoder 71 refers to an already decoded base view stored in the frame memory 125. The base decoder 71 supplies the base views obtained as a result of the decoding to the frame memory 125 and the display control unit 127.

The non-base decoder 72 determines M based on the format conversion type supplied from the SEI acquisition unit 126, and determines the non-base view encoded data to be decoded based on M. The non-base decoder 72 decodes the non-base view encoded data determined to be decoded by a method compatible with the MVC method. At this point, the non-base decoder 72 refers to an already decoded base view or non-base view stored in the frame memory 125. The non-base decoder 72 supplies the non-base views obtained as a result of the decoding to the frame memory 125 and the display control unit 127.

The frame memory 125 temporarily holds the base views supplied from the base decoder 71. The frame memory 125 also temporarily holds the non-base views supplied from the non-base decoder 72.

The SEI acquisition unit 126 supplies the format conversion type in the display control information supplied from the NAL filter 124 to the non-base decoder 72, and supplies the interpolation AU flag, the base view non-display flag, and the coding unit flag to the display control unit 127.

Based on the display control information supplied from the SEI acquisition unit 126, the display control unit 127 causes a display unit (not shown) to display the images corresponding to the base views supplied from the base decoder 71 and the non-base views supplied from the non-base decoder 72.

Specifically, the display control unit 127 determines the displaying order based on the interpolation AU flag, and determines the views to be displayed based on the base view non-display flag. Based on the base view coding unit flag, the display control unit 127 further sets the images corresponding to the base views and the non-base views as the images of units indicated by the base view coding unit flag. The display control unit 127 then causes the display unit to display, as the images of units indicated by the base view coding unit flag, the images that correspond to the base views determined to be displayed and the non-base view, and have the frame rate M times higher than the conventional frame rate in the determined displaying order.

### [Specific Example Structure of the TV Receiver 54]

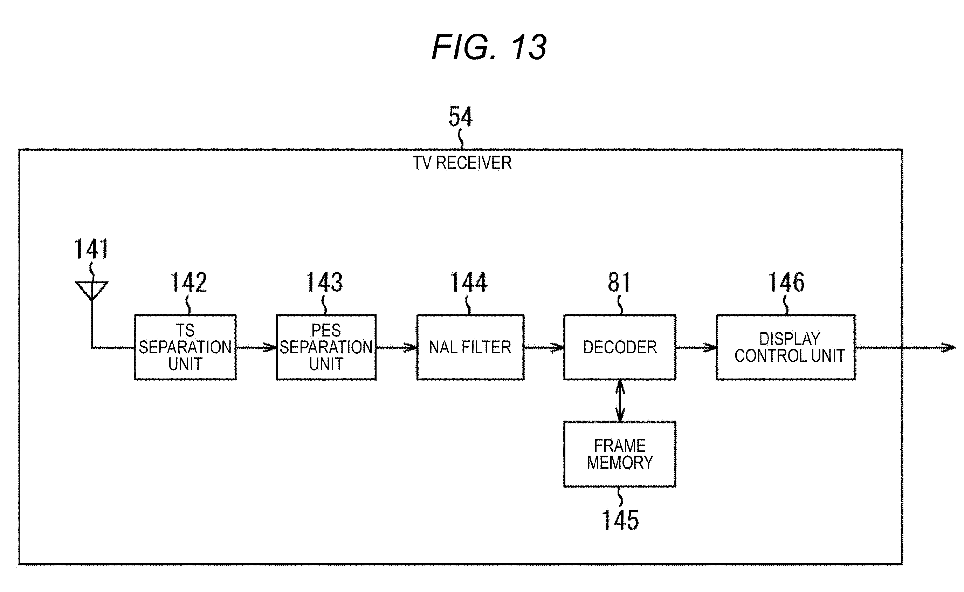

Fig. 13 is a block diagram showing a specific example structure of the TV receiver 54 shown in Fig. 3.

The TV receiver 54 shown in Fig. 13 includes not only the decoder 81 but also an antenna 141, a TS separation unit 142, a PES separation unit 143, an NAL filter 144, a frame memory 145, and a display control unit 146.

The antenna 141 functions as a reception unit, receives an MVC stream transmitted from the antenna 106 of the TV transmitter 52 (Fig. 4) using radio waves, and supplies the MVC stream to the TS separation unit 142.

The TS separation unit 142 separates the MVC stream supplied from the antenna 121 into TS packets. The TS separation unit 122 supplies the PES packets contained in the separated TS packets to the PES separation unit 143.

The PES separation unit 143 separates the PES packets supplied from the TS separation unit 142 into NAL units. The PES separation unit 143 supplies the separated NAL units to the NAL filter 144.

The NAL filter 144 refers to the NAL headers contained in the NAL units supplied from the PES separation unit 143, separates the NAL units of base view encoded data, and extracts the base view encoded data from the NAL units. The NAl filter 144 supplies the extracted base view encoded data to the decoder 81.

As described above, the decoder 81 decodes the base view encoded data by a method compatible with the AVC method. At this point, the decoder 81 refers to an already decoded base view stored in the frame memory 145. The base decoder 71 supplies the base views obtained as a result of the decoding to the frame memory 145 and the display control unit 146.

The frame memory 145 temporarily holds the base views supplied from the decoder 81.

The display control unit 146 causes a display unit (not shown) to display the images corresponding to the base views supplied from the decoder 81. As a result, the conventional-frame-rate images corresponding to the base views are displayed on the display unit.

### [Description of Processing to be Performed by the TV Receiver 53 and the TV Receiver 54]

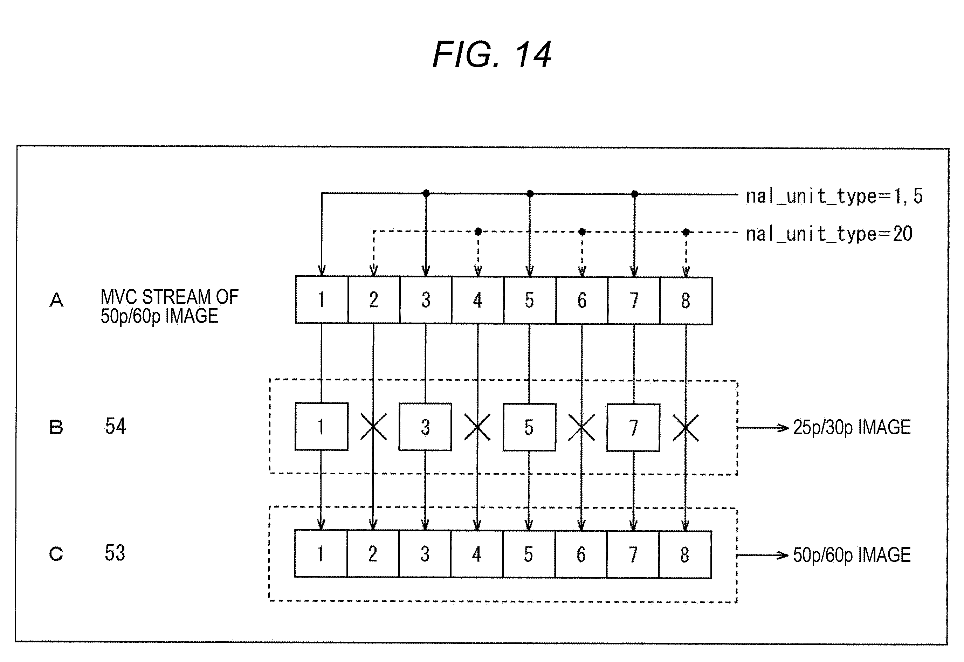

Fig. 14 is a diagram for explaining the processing to be performed by the TV receiver 53 and the TV receiver 54 in a case where the image to be encoded is a 50p/60p image, the base view coding units are the frame units of an image formed with 1920 x 1080 pixels at 25p/30p (hereinafter referred to as a 25p/30p image), the maximum value of M is 2, and the display method used by the TV receiver 53 is a progressive method.

In Fig. 14, each square represents an image of one frame, and the number in each square is the frame number.

In a case where the image to be encoded is a 50p/60p image, and the base view coding units are 25p/30p image frame units, as shown in A of Fig. 14, the images of the frames with odd frame numbers are encoded as base views. Also, the images of the frames with even frame numbers are encoded as non-base views.

Also, as shown in A of Fig. 14, 1 or 5 is written as an NAL unit type (nal_unit_type) indicating the type of an NAL unit in the NAL header of each NAL unit of base encoded data. Meanwhile, 20 is written as an NAL unit type in the NAL header of each NAL unit of non-base encoded data.

As shown in B of Fig. 14, the TV receiver 54 acquires only the NAL units of the base encoded data having the NAL headers of 1 or 5 as a NAL unit type added thereto from the NAL units contained in the MVC stream of the 50p/60p image, and performs decoding and displaying. As a result, the images of the frames with odd frame numbers in the 50p/60p image or a 25p/30p image having the conventional frame rate is displayed.

Meanwhile, as shown in C of Fig. 14, the TV receiver 53 acquires not only the NAL units of base encoded data among the NAL units contained in the MVC stream of the 50p/60p image, but also the NAL units of non-base encoded data having NAL headers of 20 as an NAL unit type added thereto and the NAL units of SEI.

In a case where the image to be encoded herein is a 50p/60p image, the format conversion type written in the SEI of the display control information is 1, which indicates that N is 2 and the image to be encoded is a progressive image. Also, since the maximum value of M for the TV receiver 53 is 2, the TV receiver 53 has the ability to process 50p/60p images. Therefore, the TV receiver 53 determines M to be 2, and determines all the non-base encoded data to be decoded based on M. The TV receiver 53 then decodes the base encoded data and the non-base encoded data.

In accordance with the interpolation AU flags, the base view non-display flags, and the coding unit flags written in the SEI of the display control information, the TV receiver 53 displays the 50p/60p image based on the high-frame-rate data formed with the base views and non-base views obtained as a result of the decoding.

Specifically, as shown in A of Fig. 14, all the non-base views are the image data of the frame units forming the image data of the frames independent of the base views. Accordingly, all the interpolation AU flags are "0", which indicates that the corresponding non-base view is neither the image data of the field nor the image data of the frame that form the image data of the same frame as the base view.
Therefore, the TV receiver 53 sets the displaying order of the base views and the non-base views in accordance with POC (Picture Order Count).

In a case where the image to be encoded is a 50p/60p image, a 100i/120i image cannot be displayed. Therefore, the base view non-display flag is "0", and all the decoded base views and non-base views are set as the views to be displayed.

Furthermore, since the coding units of the base views are frames, the base view coding unit flag is "0", which indicates that the corresponding base views are encoded by the frame. Therefore, the TV receiver 53 sets the images corresponding to the base views and the non-base views as frame unit images.

Based on the displaying order determined as above, the frames as the units to be displayed, and the views to be displayed, the TV receiver 53 displays all the images corresponding to the base views and the non-base views as the frame unit images in the displaying order. In this manner, a 50p/60p image is displayed.

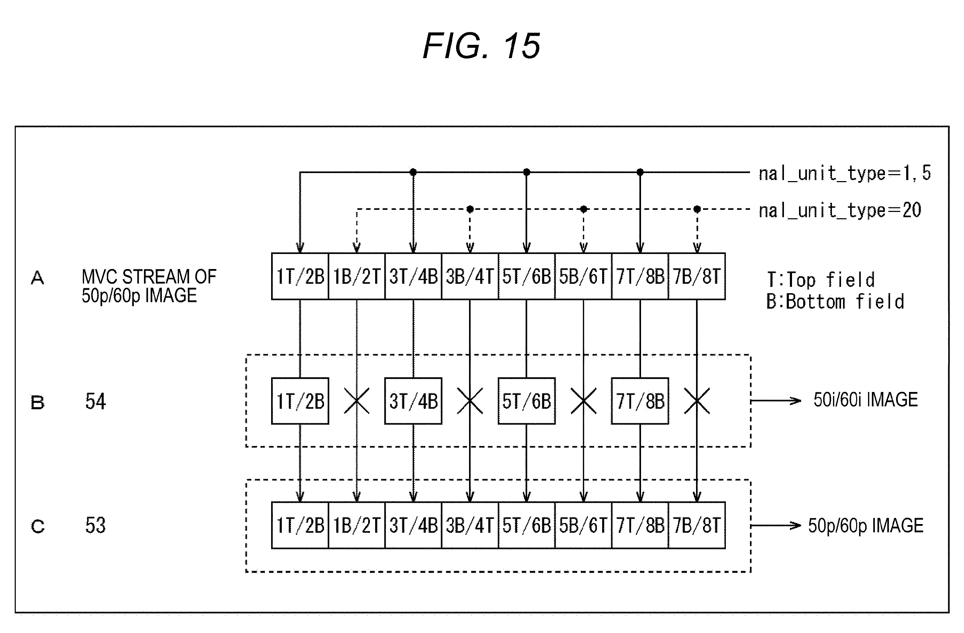

Fig. 15 is a diagram for explaining the processing to be performed by the TV receiver 53 and the TV receiver 54 in a case where the image to be encoded is a 50p/60p image, the base view coding units are the frame units of an image formed with 1920 x 1080 pixels at 50i/60i (hereinafter referred to as a 50i/60i image), the maximum value of M is 2, and the display method used by the TV receiver 53 is a progressive method.

In Fig. 15, each square represents the image of one frame. In each square, the number is the frame number, T represents the top field, and B represents the bottom field. Specifically, 1T/2B is a frame formed with the top field of the frame with the frame number 1 and the bottom field of the frame with the frame number 2, for example.

In a case where the image to be encoded is a 50p/60p image, and the base view coding units are 50i/60i image frame units, as shown in A of Fig. 15, the image data of the frames (hereinafter referred to as the odd-numbered frames) formed with the top fields of the frames with the odd frame numbers and the bottom fields of the frames with the even frame numbers is encoded as base views, for example. Also, the image data of the frames (hereinafter referred to as the even-numbered frames) formed with the bottom fields of the frames with odd frame numbers and the top fields of the frames with the even frame numbers is encoded as non-base views.

As shown in B of Fig. 15, the TV receiver 54 acquires only the NAL units of the base encoded data having the NAl headers of 1 or 5 as a NAL unit type added thereto from the NAL units contained in the MVC stream of the 50p/60p image, and performs decoding and displaying. As a result, the images of the odd-numbered frames in the 50p/60p image or a 50i/60i image having the conventional frame rate is displayed.

Meanwhile, as shown in C of Fig. 15, the TV receiver 53 acquires not only the NAL units of base encoded data among the NAL units contained in the MVC stream of the 50p/60p image, but also the NAL units of non-base encoded data having NAL headers of 20 as an NAL unit type added thereto and the NAL units of SEI.

In the case where the image to be encoded is a 50p/60p image, the format conversion type is 1, and the maximum value of M for the TV receiver 53 is 2, as described above. Therefore, the TV receiver 53 has the ability to process 50p/60p images. Therefore, the TV receiver 53 determines M to be 2, and determines all the non-base encoded data to be decoded based on M. The TV receiver 53 then decodes the base encoded data and the non-base encoded data.

In accordance with the interpolation AU flags, the base view non-display flags, and the coding unit flags written in the SEI of the display control information, the TV receiver 53 displays the 50p/60p image based on the high-frame-rate data formed with the base views and non-base views obtained as a result of the decoding.

Specifically, as shown in A of Fig. 15, all the non-base views are the image data of the frame units forming the image data of the same frames as the base views, and all the interpolation AU flags are "1". Therefore, the TV receiver 53 sets the displaying order of the base views and the non-base views in a continuous manner. As described above, in a case where the image to be encoded is a 50p/60p image, a 100i/120i image cannot be displayed. Therefore, the base view non-display flag is "0", and all the decoded base views and non-base views are set as the views to be displayed.

Furthermore, since the coding units of the base views are frames, the base view coding unit flag is "0", and the TV receiver 53 sets the images corresponding to the base views and the non-base views as frame unit images.

Based on the displaying order determined as above, the frames as the units to be displayed, and the views to be displayed, the TV receiver 53 displays the images corresponding to all the base views and non-base views as the frame unit images in such a manner that the images corresponding to the base views and the non-base views are continuously displayed. In this manner, a 50p/60p image is displayed.

In this embodiment, when the coding unit flag is "0", the coding units are frames of progressive images as shown in Fig. 14 or are frames of interlaced images as shown in Fig. 15, and there are no distinctions between the case illustrated in Fig. 14 and the case illustrated in Fig. 15. However, those cases may be distinguished from each other.

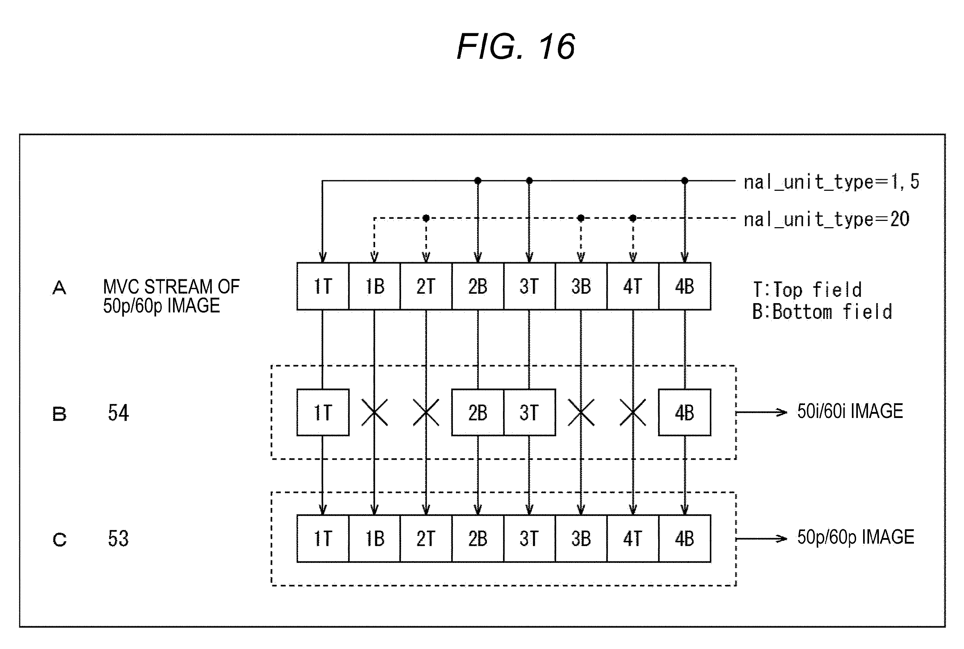

Fig. 16 is a diagram for explaining the processing to be performed by the TV receiver 53 and the TV receiver 54 in a case where the image to be encoded is a 50p/60p image, the base view coding units are the field units of a 50i/60i image, the maximum value of M is 2, and the display method used by the TV receiver 53 is a progressive method.

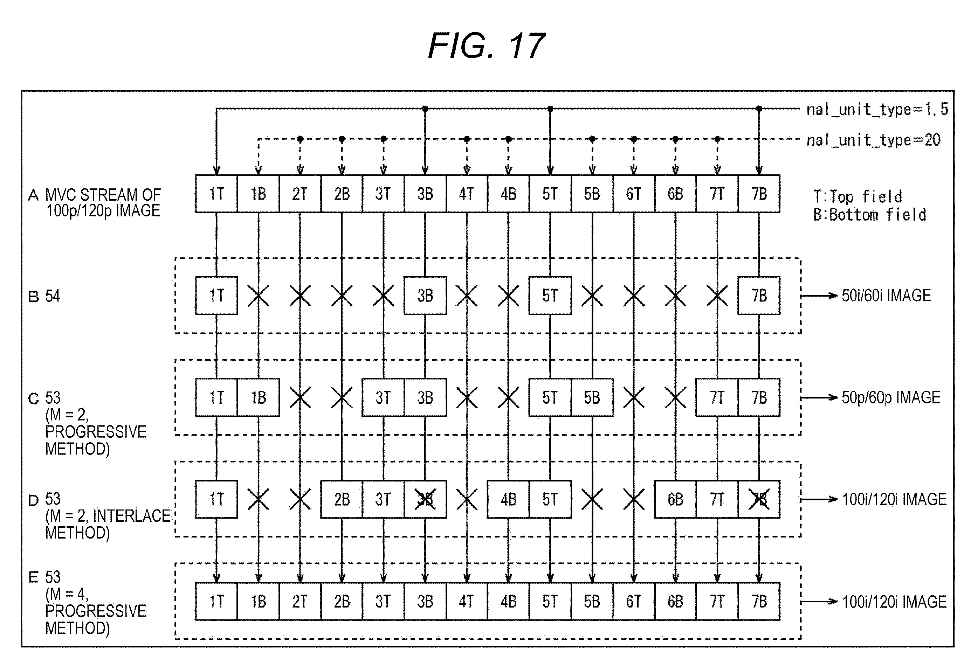

In Fig. 16, each square represents the image of one field. In each square, the number is the frame number, T represents the top field, and B represents the bottom field. Specifically, 1T represents the top field of the frame with the frame number 1, and 2B represents the bottom field of the frame with the frame number 2, for example. The same applies to Fig. 17 described later.

In a case where the image to be encoded is a 50p/60p image, and the base view coding units are 50i/60i image field units, as shown in A of Fig. 16, the image data of the top fields of the frames with odd frame numbers and the bottom fields of the frames with even frame numbers is encoded as base views, for example. Also, the image data of the bottom fields of the frames with odd frame numbers and the top fields of the frames with the even frame numbers is encoded as non-base views.

As shown in B of Fig. 16, the TV receiver 54 acquires only the NAL units of the base encoded data having the NAl headers of 1 or 5 as a NAL unit type added thereto from the NAL units contained in the MVC stream of a 50p/60p image, and performs decoding and displaying. As a result, the images of the top fields of the frames with odd frame numbers and the images of the bottom fields of the frames with even frame numbers in the 50p/60p image, or a 50i/60i image having the conventional frame rate is displayed.

Meanwhile, as shown in C of Fig. 16, the TV receiver 53 acquires not only the NAL units of base encoded data among the NAL units contained in the MVC stream of the 50p/60p image, but also the NAL units of non-base encoded data having NAL headers of 20 as an NAL unit type added thereto and the NAL units of SEI.

In the case where the image to be encoded is a 50p/60p image, the format conversion type is 1, and the maximum value of M for the TV receiver 53 is 2, as described above. Therefore, the TV receiver 53 has the ability to process 50p/60p images. Therefore, the TV receiver 53 determines M to be 2, and determines all the non-base encoded data to be decoded based on M. The TV receiver 53 then decodes the base encoded data and the non-base encoded data.

In accordance with the interpolation AU flags, the base view non-display flags, and the coding unit flags written in the SEI of the display control information, the TV receiver 53 displays the 50p/60p image based on the high-frame-rate data formed with the base views and non-base views obtained as a result of the decoding.

Specifically, as shown in A of Fig. 16, all the non-base views are the image data of the field units forming the image data of the same frames as the base views, and all the interpolation AU flags are "1". Therefore, the TV receiver 53 sets the displaying order of the base views and the non-base views in a continuous manner. Also, in a case where the image to be encoded is a 50p/60p image, a 100i/120i image cannot be displayed. Therefore, the base view non-display flag is "0", and all the decoded base views and non-base views are set as the views to be displayed, as in Figs. 14 and 15.

Furthermore, since the coding units of the base views are fields, the base view coding unit flag is "1", which indicates that the corresponding base views are encoded by the field. Therefore, the TV receiver 53 sets the images corresponding to the base views and the non-base views as field unit images.

Based on the displaying order determined as above, the fields as the units to be displayed, and the views to be displayed, the TV receiver 53 displays the images corresponding to all the base views and non-base views as the field unit images in such a manner that the images corresponding to the base views and the non-base views are continuously displayed. In this manner, a 50p/60p image is displayed.

Fig. 17 is a diagram for explaining the processing to be performed by the TV receiver 53 and the TV receiver 54 in a case where the image to be encoded is a 100p/120p image, and the base view coding units are the field units of a 50i/60i image.

In a case where the image to be encoded is a 100p/120p image, and the base view coding units are 50i/60i image field units, as shown in A of Fig. 17, the image data of the top field of the frame with every other odd frame number and the bottom field of the frame with each of the other odd frame numbers is encoded as base views, for example. Also, the image data of the bottom field of the frame with every other odd frame number, the top fields of the frames with the other odd frame numbers, and the top fields and bottom fields of the frames with the even frame numbers is encoded as non-base views.

As shown in B of Fig. 17, the TV receiver 54 acquires only the NAL units of the base encoded data having the NAl headers of 1 or 5 as a NAL unit type added thereto from the NAL units contained in the MVC stream of the 100p/120p image, and performs decoding and displaying. As a result, the images of the top field of the frame with every other odd frame number and the images of the bottom fields of the frames with the other odd frame numbers in the 100p/120p image, or a 50i/60i image having the conventional frame rate is displayed.

Meanwhile, as shown in C through E of Fig. 17, the TV receiver 53 extracts not only the NAL unit of base encoded data among the NAL units contained in the MVC stream of the 100p/120p image, but also the NAL units of non-base encoded data having NAL headers of 20 as an NAL unit type added thereto and the NAL units of SEI.

In a case where the image to be encoded herein is a 100p/120p image, the format conversion type written in the SEI of the display control information is 3, which indicates that N is 4 and the image to be encoded is a progressive image. Also, in a case where the maximum value of M for the TV receiver 53 is 2, and the display method is a progressive method, the TV receiver 53 has the ability to process 50p/60p images. Therefore, the TV receiver 53 determines M to be 2, and, based on M, determines the non-base encoded data of the top fields and the bottom fields of the frames with the odd frame numbers to be the data to be decoded, as shown in C of Fig. 17. The TV receiver 53 then decodes the base encoded data and the non-base encoded data determined to be the data to be decoded.

In accordance with the interpolation AU flags, the base view non-display flags, and the coding unit flags written in the SEI of the display control information, the TV receiver 53 displays the 50p/60p image based on the base views and non-base views obtained as a result of the decoding.

Specifically, as shown in A of Fig. 17, the non-base views of the frames with the odd frame numbers are the image data of the field units forming the image data of the same frames as the base views. Therefore, the interpolation AU flags for the frames with the odd frame numbers are "1". In view of this, the TV receiver 53 sets the displaying order of the base views and non-base views obtained as a result of the decoding in a continuous manner.

Also, in a case where the image to be encoded is a 100p/120p image, the base views of the top fields need to be displayed so as to display a 100i/120i image, but there is no need to display the base views of the bottom fields. Therefore, the base view non-display flags of the non-base views of the bottom fields forming the same frames as the base views of the top fields are "0", which indicates that the base views forming the image data of the same frames as the corresponding non-base views are to be displayed. Meanwhile, the base view non-display flags of the non-base views of the top fields forming the same frames as the base views of the bottom fields are "1", which indicates that the base views forming the image data of the same frames as the corresponding non-base views are not to be displayed.

In this case, however, the TV receiver 53 is not yet displaying any 100i/120i image. Therefore, the base view non-display flags "1" are ignored, and all the decoded base views and non-base views are set as the views to be displayed.

Furthermore, since the coding units of the base views are fields, the base view coding unit flag is "1", which indicates that the corresponding base views are encoded by the field. Therefore, the TV receiver 53 sets the images corresponding to the base views and the non-base views as the field unit images.

Based on the displaying order determined as above, the fields as units to be displayed, and the views to be displayed, the TV receiver 53 displays the images corresponding to all the base views and the non-base views of the top fields and the bottom fields of the frames with the odd frame numbers as the field unit images in such a manner that the images corresponding to the base views and the non-base views are continuously displayed. In this manner, a 50p/60p image is displayed.

In a case where the maximum value of M for the TV receiver 53 is 2, and the display method is an interlace method, on the other hand, the TV receiver 53 has the ability to process 100i/120i images. As described above, the format conversion type is 4. Therefore, the TV receiver 53 determines M to be 2, and, based on M, determines the non-base encoded data of the top fields of the frames with the odd frame numbers and the bottom fields of the frames with the even frame numbers to be the data to be decoded, as shown in D of Fig. 17. The TV receiver 53 then decodes the base encoded data and the non-base encoded data determined to be the data to be decoded.

In accordance with the interpolation AU flags, the base view non-display flags, and the coding unit flags written in the SEI of the display control information, the TV receiver 53 displays the 100i/120i image based on the base views and non-base views obtained as a result of the decoding.

Specifically, the interpolation AU flags of the frames with the odd frame numbers are "1", which indicates that the corresponding non-base views are the image data of the field or frame units forming the image data of the same frames as the base views, as described above. On the other hand, as shown in A of Fig. 17, the non-base views of the frames with the even frame numbers are the image data of the field units forming the image data of the same frames as the other non-base views. Accordingly, the interpolation AU flags of the frames with the even frame numbers are "0", which indicates that the corresponding non-base views are not the image data of the field or frame units forming the image data of the same frames as the base views.

Therefore, the TV receiver 53 sets the displaying order of the base views and non-base views of the frames with the odd frame numbers in a continuous manner. The TV receiver 53 also sets the displaying order of the non-base views of the frames with the even frame numbers in accordance with POC.

Furthermore, the base view non-display flags of the non-base views of the bottom fields forming the same frames as the base views of the top fields are "0", and the base view non-display flags of the non-base views of the top fields forming the same frames as the base views of the bottom fields are "1", as described above. Therefore, the TV receiver 53 sets the decoded base views and non-base views other than the base views of the bottom fields having the base view non-display flags "1" as the views to be displayed.

Since the base view coding unit flag is "1", as described above, the TV receiver 53 sets the images corresponding to the base views and the non-base views as the field unit images.

Based on the displaying order determined as above, the fields as the units to be displayed, and the views to be displayed, the TV receiver 53 displays the images corresponding to the base views of the top fields and the non-base views of the top fields of the frames with the odd frame numbers and the bottom fields of the frames with the even frame numbers as the field unit images in the displaying order. In this manner, a 100i/120i image is displayed.

Also, in a case where the maximum value of M for the TV receiver 53 is 4, and the display method is a progressive method, the TV receiver 53 has the ability to process 100p/120p images. As described above, the format conversion type is 4. Therefore, the TV receiver 53 determines M to be 4, and determines all the non-base encoded data to be decoded based on M, as shown in E of Fig. 17. The TV receiver 53 then decodes the base encoded data and the non-base encoded data.

In accordance with the interpolation AU flags, the base view non-display flags, and the coding unit flags written in the SEI of the display control information, the TV receiver 53 displays the 100p/120p image based on the base views and non-base views obtained as a result of the decoding.

Specifically, the interpolation AU flags of the frames with the odd frame numbers are "1", and the interpolation AU flags of the frames with the even frame numbers are "0", as described above. Therefore, the TV receiver 53 sets the displaying order of the base views and non-base views of the frames with the odd frame numbers in a continuous manner, as described above, and sets the displaying order of the non-base views of the frames with the even frame numbers in accordance with POC.

In this case, the TV receiver 53 is not yet displaying any 100i/120i image. Therefore, the base view non-display flags "1" are ignored, and all the decoded base views and non-base views are set as the views to be displayed. Further, since the base view coding unit flag is "1", as described above, the TV receiver 53 sets the images corresponding to the base views and the non-base views as the field unit images.

Based on the displaying order determined as above, the fields as the units to be displayed, and the views to be displayed, the TV receiver 53 displays the images corresponding to all the base views and non-base views as the field unit images in the displaying order. In this manner, a 100p/120p image is displayed.

### [Description of Processing to be Performed by the TV Receiver 53]

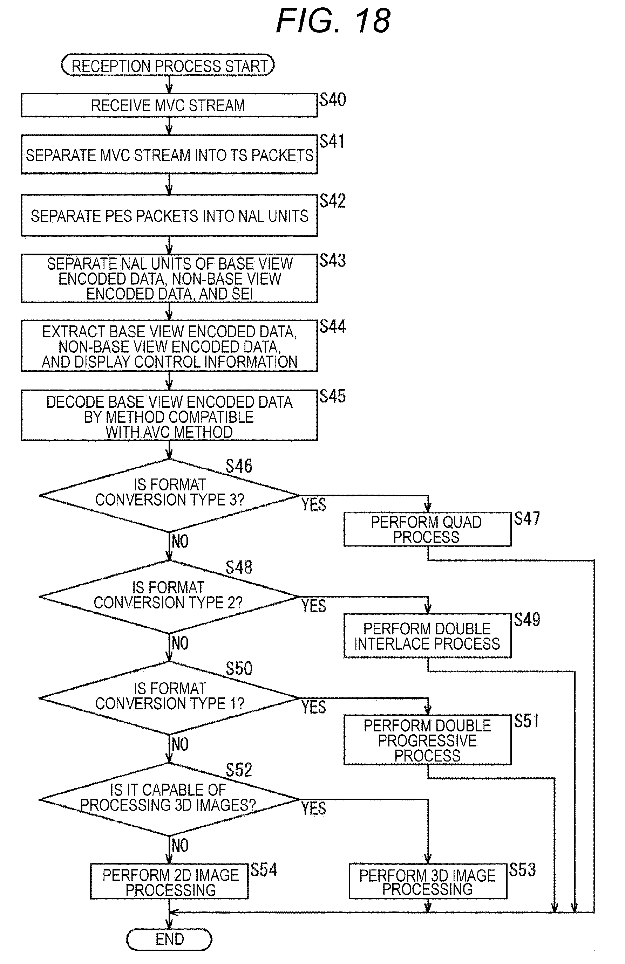

Fig. 18 is a flowchart for explaining a reception process to be performed by the TV receiver 53 that has 4 as the maximum value of M and is compatible with a progressive method. This reception process is started when an MVC stream is transmitted to the TV receiver 53, for example.

In step S40 in Fig. 18, the antenna 121 receives an MVC stream transmitted from the antenna 106 of the TV transmitter 52 using radio waves, and supplies the MVC stream to the TS separation unit 122.

In step S41, the TS separation unit 122 separates the MVC stream supplied from the antenna 121 into TS packets. The TS separation unit 122 supplies the display control information flags contained in the separated TS packets to the NAL filter 124. The TS separation unit 122 also supplies the PES packets contained in the separated TS packets to the PES separation unit 123.

In step S42, the PES separation unit 123 separates the PES packets supplied from the TS separation unit 122 into NAL units. The PES separation unit 123 supplies the separated NAL units to the NAL filter 124.

In step S43, the NAL filter 124 refers to the NAL headers contained in the NAL units, and separates the NAL units of base view encoded data, non-base encoded data, SEI, and the like from one another.

In step S44, based on the display control information flags supplied from the TS separation unit 122, the NAL filter 124 extracts the base view encoded data, the non-base view encoded data, and the display control information from the NAL units separated in step S43. The NAL filter 124 then supplies the extracted base view encoded data to the base decoder 71, and supplies the non-base view encoded data to the non-base decoder 72. The NAL filter 124 also supplies the extracted display control information to the SEI acquisition unit 126. The SEI acquisition unit 126 then supplies the format conversion type in the display control information supplied from the NAL filter 124 to the non-base decoder 72, and supplies the interpolation AU flags, the base view non-display flags, and the coding unit flag to the display control unit 127.

In step S45, the base decoder 71 decodes the base view encoded data supplied from the NAL filter 124 by a method compatible with the AVC method. At this point, the base decoder 71 refers to already decoded base views stored in the frame memory 125. The base decoder 71 supplies the base views obtained as a result of the decoding to the frame memory 125 to store, and also supplies the base views to the display control unit 127.

In step S46, the non-base decoder 72 determines whether the format conversion type is 3. If the format conversion type is determined to be 3 in step S46, or if the image to be encoded is a 100p/120p image, the process moves on to step S47.

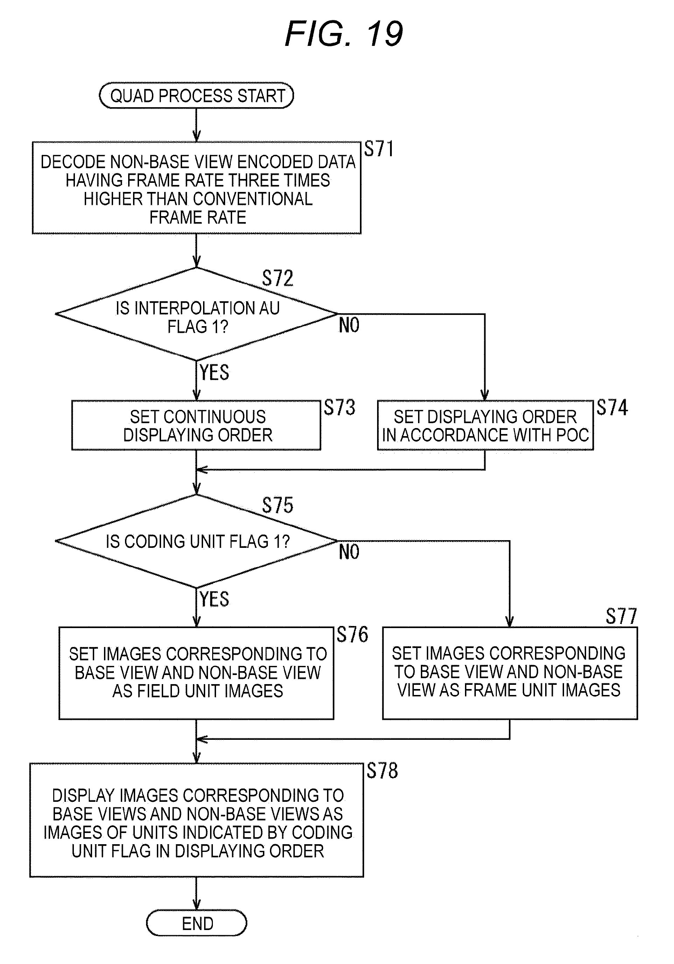

In step S47, the TV receiver 53 performs a quad process to display a 100p/120p image formed with base views and non-base views based on the display control information, and ends the process. The quad process will be described later in detail with reference to Fig. 19.

If the format conversion type is determined not to be 3 in step S46, on the other hand, the non-base decoder 72 in step S48 determines whether the format conversion type is 2.

If the format conversion type is determined to be 2 in step S48, or if the image to be encoded is a 100i/120i image, the process moves on to step S49.

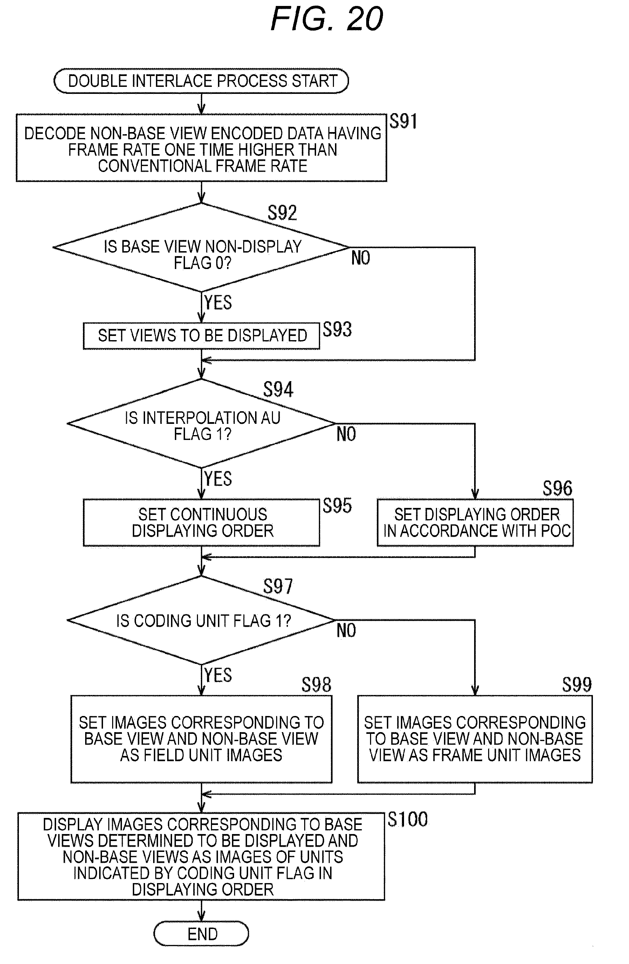

In step S49, the TV receiver 53 performs a double interlace process to display a 100i/120i image formed with base views and non-base views based on the display control information, and ends the process. The double interlace process will be described later in detail with reference to Fig. 20.

If the format conversion type is determined not to be 2 in step S48, the non-base decoder 72 in step S50 determines whether the format conversion type is 1.

If the format conversion type is determined to be 1 in step S50, or if the image to be encoded is a 50p/60p image, the process moves on to step S51.

In step S51, the TV receiver 53 performs a double progressive process to display a 50p/60p image formed with base views and non-base views based on the display control information, and ends the process. The double progressive process will be described later in detail.

If the format conversion type is determined not to be 1 in step S50, or if the format conversion type is 0, the non-base decoder 72 in step S52 determines whether the TV receiver 53 is capable of processing 3D images.

If it is determined in step S52 that the TV receiver 53 is capable of processing 3D images in step S53, the TV receiver 53 in step S52 performs 3D image processing to display the images corresponding to base views as images for the left eye, and the images corresponding to non-base views as images for the right eye.

Specifically, the non-base decoder 72 of the TV receiver 53 decodes the non-base view encoded data by a method compatible with the MVC method, and supplies the resultant data to the display control unit 127. The display control unit 127 then causes a 3D image to be displayed by displaying the images corresponding to the base views from the base decoder 71 as the images for the left eye, and displaying the images corresponding to the non-base views from the non-base decoder 72 as the images for the right eye. The process then comes to an end.

If it is determined in step S52 that the TV receiver 53 is not capable of processing 3D images, on the other hand, the display control unit 127 in step S54 performs 2D image processing to display the images corresponding to the base views supplied from the base decoder 71 as 2D images. The process then comes to an end.

Although not shown in a drawing, a reception process to be performed by the TV receiver 53 that has 2 as the maximum value of M and is compatible with an interlace method is the same as the reception process shown in Fig. 18, except that steps S46 and S47 are skipped, and a check is made to determine whether the format conversion type is 2 or 3 in step S48.

Although not shown in a drawing either, a reception process to be performed by the TV receiver 53 that has 2 as the maximum value of M and is compatible with a progressive method is the same as the reception process shown in Fig. 18, except that steps S46 through S49 are skipped, and a check is made to determine whether the format conversion type is any of 1 through 3 in step S50.

Although not shown in a drawing either, a reception process to be performed by a TV receiver that is capable of processing 3D images and is compatible with the MVC method is the same as the reception process shown in Fig. 18, except that the display control flags are ignored in step S41, the display control information is not extracted in step S44, and the processing of step S53 is performed after the processing of S45.

Fig. 19 is a flowchart for specifically explaining the quad process in step S47 in Fig. 18.

In step S71 in Fig. 19, the non-base decoder 72 determines M to be 4, and decodes non-base view encoded data having a frame rate three (= M - 1) times higher than the conventional frame rate, or all the non-base view encoded data. At this point, the non-base decoder 72 refers to already decoded base views or non-base views stored in the frame memory 125. The non-base decoder 72 supplies the non-base views obtained as a result of the decoding to the frame memory 125 to store, and also supplies the non-base views to the display control unit 127. The process then moves on to step S72. The processing in steps S72 through S77 is performed for each of the decoded non-base views.

In step S72, the display control unit 127 determines whether the interpolation AU flag is 1. If the interpolation AU flag is determined to be 1 in step S72, the display control unit 127 in step S73 sets the displaying order of the current non-base views being processed and the base view corresponding to the non-base view in a continuous manner. The process then moves on to step S75.

If the interpolation AU flag is determined not to be 1 in step S72, or if the interpolation AU flag is 0, the display control unit 127 in step S74 sets the displaying order of the current non-base view being processed and the base view corresponding to the non-base view in accordance with POC. The process then moves on to step S75.

In step S75, the display control unit 127 determines whether the coding unit flag is 1. If the coding unit flag is determined to be 1 in step S75, the display control unit 127 in step S76 sets the images corresponding to the base view and the non-base view as field unit images, and the process moves on to step S78.

If the coding unit flag is determined not to be 1 in step S75, or if the coding unit flag is 0, the process moves on to step S77. In step S77, the display control unit 127 sets the images corresponding to the base view and non-base view as frame unit images, and the process moves on to step S78.

In step S78, the display control unit 127 causes a display unit to display the images corresponding to the decoded base views and non-base views as the images of the units indicated by the coding unit flag in the displaying order. The process then comes to an end.

It should be noted that the double progressive process in step S51 in Fig. 18 is the same as the quad process shown in Fig. 19, except that, in step S71 in Fig. 19, the non-base decoder 72 determines M to be 2, and decodes the non-base encoded data having a frame rate one (= M - 1) time higher than the conventional frame rate. Therefore, explanation of the double progressive process is not made herein.

Fig. 20 is a flowchart for specifically explaining the double interlace process in step S49 in Fig. 18.

In step S91 in Fig. 20, the non-base decoder 72 determines M to be 2, and decodes non-base view encoded data having a frame rate one (= M - 1) time higher than the conventional frame rate. At this point, the non-base decoder 72 refers to already decoded base views or non-base views stored in the frame memory 125. The non-base decoder 72 supplies the non-base views obtained as a result of the decoding to the frame memory 125 to store, and also supplies those non-base views to the display control unit 127. The process then moves on to step S92. The processing in steps S92 through S99 is performed for each of the decoded non-base views.

In step S92, the display control unit 127 determines whether the base view non-display flag is 0. If the base view non-display flag is determined to be 0 in step S92, the display control unit 127 in step S93 sets the base view corresponding to the current non-base view being processed as a base view to be displayed. The process then moves on to step S94.

If the base view non-display flag is determined not to be 0 in step S92, or if the base view non-display flag is 1, on the other hand, the display control unit 127 sets the base view corresponding to the current non-base view being processed as a base view to be displayed. The process then moves on to step S94.

The processing in steps S94 through S99 is the same as the processing in steps S72 through S77 in Fig. 19, and therefore, explanation of them is not repeated herein.

After the processing in step S99, the display control unit 127 in step S100 causes the display unit to display the images corresponding to the base views determined to be displayed in step S93 and the non-base views as the images of the units indicated by the coding unit flag in the displaying order. The process then comes to an end.

As described above, the TV receiver 53 decodes base encoded data contained in an MVC stream transmitted from the TV transmitter 52 by a method compatible with the AVC method, and decodes non-base encoded data by a method compatible with the MVC method. Accordingly, the TV receiver 53 can decode high-frame-rate data encoded by the TV transmitter 52 using a method compatible with the method used for conventional-frame-rate images.

Also, the TV receiver 53 performs decoding of base views and non-base views, and performs display control based on the display control information. Thus, images having a frame rate that is M times higher than the conventional frame rate can be displayed.

Furthermore, as the display control information is written in the SEI for the MVC method, the TV receiver 53 can acquire the display control information without a conspicuous system change from a TV receiver compatible with the MVC method, or more particularly, without a change in the hardware.

### [Description of Processing to be Performed by the TV Receiver 54]

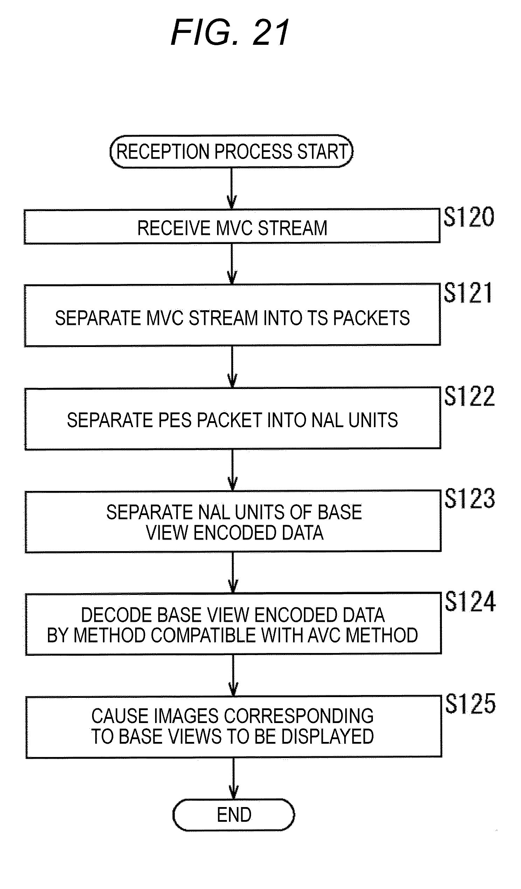

Fig. 21 is a flowchart for explaining the reception process to be performed by the TV receiver 54. This reception process is started when an MVC stream is transmitted to the TV receiver 54, for example.

In step S120 in Fig. 21, the antenna 141 receives an MVC stream transmitted from the antenna 106 of the TV transmitter 52 using radio waves, and supplies the MVC stream to the TS separation unit 142.

In step S121, the TS separation unit 142 separates the MVC stream supplied from the antenna 121 into TS packets. The TS separation unit 122 supplies the PES packets contained in the separated TS packets to the PES separation unit 143.

In step S122, the PES separation unit 143 separates the PES packets supplied from the TS separation unit 142 into NAL units. The PES separation unit 143 supplies the separated NAL units to the NAL filter 144.

In step S123, the NAL filter 144 refers to the NAL headers contained in the NAL units supplied from the PES separation unit 143, separates the NAL units of base view encoded data, and extracts the base view encoded data from those NAL units. The NAl filter 144 supplies the extracted base view encoded data to the decoder 81.

In step S124, the decoder 81 decodes the base view encoded data by a method compatible with the AVC method. At this point, the decoder 81 refers to an already decoded base view stored in the frame memory 145. The base decoder 71 supplies the base views obtained as a result of the decoding to the frame memory 145 to store, and also supplies the base views to the display control unit 146.

In step S125, the display control unit 146 causes a display unit (not shown) to display the images corresponding to the base views supplied from the decoder 81. As a result, the conventional-frame-rate images corresponding to the base views are displayed on the display unit.

As described above, the TV receiver 54 decodes base encoded data contained in an MVC stream transmitted from the TV transmitter 52 by a method compatible with the AVC method. Accordingly, the TV receiver 53 can decode the conventional-frame-rate image data contained in high-frame-rate data encoded by the TV transmitter 52 using a method compatible with the method used for conventional-frame-rate images.

Conventional-frame-rate images are encoded by the AVC method, and high-frame-rate images are encoded by the MVC method in this embodiment. However, encoding methods that can be used are not limited to the above, as long as the encoding method for high-frame-rate images has compatibility with the encoding method for conventional-frame-rate images.

Also, the display control information may only partially contain format conversion types, interpolation AU flags, base view non-display flags, and base view coding unit flags. Furthermore, the display control information may contain non-decode flags (force_no_decorded_flag) indicating whether the corresponding non-base views are to be decoded.

In a case where the image to be encoded is a 100p/120p image, the maximum value of M is 2, and the TV receiver 53 is compatible with a progressive method, for example, the non-decode flags of non-base views (2T, 2B, 4T, 4B, 6T, and 6B in the example shown in Fig. 17) that do not need to be displayed when a 50p/60p image in the 100p/120p image is displayed are "1", which indicates that the corresponding non-base views are not to be decoded. The non-decode flags of the non-base views (1B, 3T, 5B, and 7T in the example shown in Fig. 17) that need to be displayed when a 50p/60p image is displayed are "0", which indicates that the corresponding non-base views are to be decoded. In a case where the display control information contains non-decode flags, the non-base decoder 72 determines the non-base encoded data corresponding to the non-decode flags "0" to be the data to be decoded based on the non-decode flags. The non-decode flags may be generated depending on possible abilities of the TV receiver 53.

Further, the base view non-display flags are the information to be used when a 100i/120i image is displayed in the above description. However, the base view non-display flags may be the information to be used when an image other than a 100i/120i image is displayed.

### [Description of a Computer to Which the Present Technique Is Applied]

The above described series of processes can be performed with hardware, and can also be performed with software. Where the series of processes are performed with software, the program that forms the software is installed into a general-purpose computer or the like.

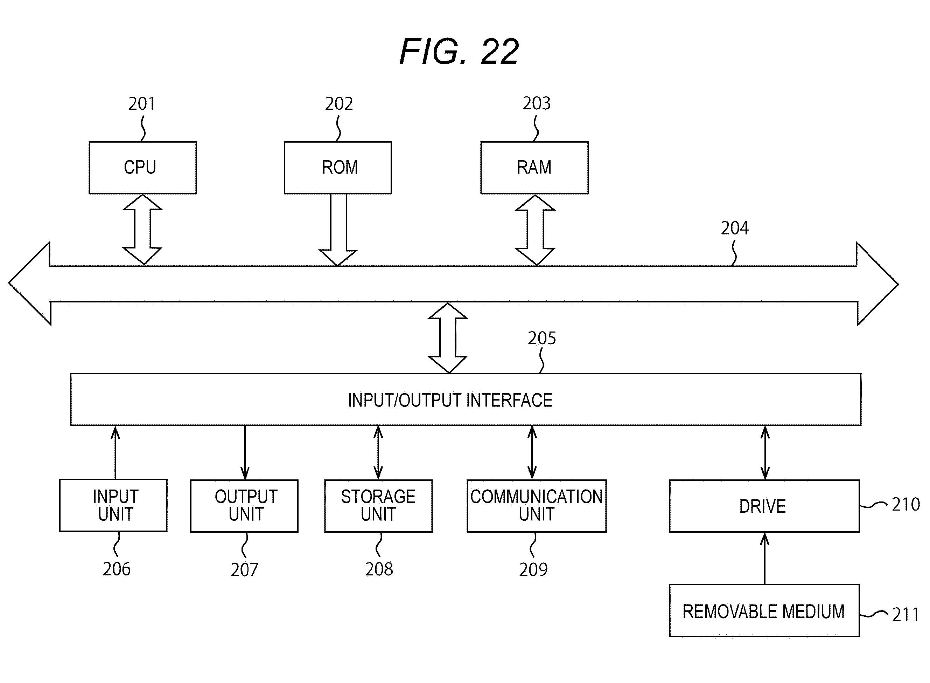

In view of this, Fig. 22 shows an example structure of an embodiment of a computer into which the program for performing the above described series of processes is installed.

The program can be recorded beforehand in a storage unit 208 or a ROM (Read Only Memory) 202 provided as a recording medium in the computer.

Alternatively, the program can be stored (recorded) in a removable medium 211. Such a removable medium 211 can be provided as so-called packaged software. Here, the removable medium 211 may be a flexible disk, a CD-ROM (Compact Disc Read Only Memory), MO (Magneto Optical) disk, a DVD (Digital Versatile Disc), a magnetic disk, or a semiconductor memory, for example.

The program can be installed into the computer from the above described removable medium 211 via a drive 210, but can also be downloaded into the computer via a communication network or a broadcasting network and be installed into the internal storage unit 208. That is, the program can be wirelessly transferred from a download site, for example, to the computer via an artificial satellite for digital satellite broadcasting, or can be transferred by cable to the computer via a network such as a LAN (Local Area Network) or the Internet.

The computer includes a CPU (Central Processing Unit) 201, and an input/output interface 205 is connected to the CPU 201 via a bus 204.

When an instruction is input by a user operating an input unit 206 or the like via the input/output interface 205, the CPU 201 executes the program stored in the ROM 202 in accordance with the instruction. Alternatively, the CPU 201 loads the program stored in the storage unit 208 into a RAM (Random Access Memory) 203, and executes the program.

By doing so, the CPU 201 performs the processes according to the above described flowcharts, or performs the processes with the structures illustrated in the above described block diagrams. Where necessary, the CPU 201 outputs the processing results from an output unit 207 or transmits the processing results from a communication unit 209 via the input/output interface 205, for example, and further stores the processing results into the storage unit 208.

The input unit 206 is formed with a keyboard, a mouse, a microphone, and the like. The output unit 207 is formed with a LCD (Liquid Crystal Display), a speaker, and the like.

In this specification, the processes performed by the computer in accordance with the program are not necessarily performed in chronological order compliant with the sequences shown in the flowcharts. That is, the processes to be performed by the computer in accordance with the program include processes to be performed in parallel or independently of one another (such as parallel processes or object-based processes).

The program may be executed by one computer (processor), or may be executed in a distributive manner by more than one computer. Further, the program may be transferred to a remote computer, and be executed therein.

In this specification, a system means an entire apparatus formed with more than one device.

It should be noted that embodiments of the present technique are not limited to the above described embodiments, and various modifications may be made to them without departing from the scope of the present technique.

The present technique may further be embodied in the structures described below.

(1) An encoding device including:
   an encoding unit that encodes images having a predetermined frame rate among images having a first frame rate as base images, and encodes the images other than the base images among the images having the first frame rate as non-base images by referring to the base images;
   a generation unit that generates display control information to be used to display the base images and the non-base images as images having a second frame rate equal to or lower than the first frame rate; and
   a transmission unit that transmits the base images and the non-base images encoded by the encoding unit, and the display control information generated by the generation unit.
(2) The encoding device of (1), further including
   a transmission data generation unit that generates transmission data containing the base images and the non-base images encoded by the encoding unit and the display control information generated by the generation unit,
   the generation unit generating the display control information and a display control information flag indicating whether the display control information is contained in the transmission data,
   the transmission unit transmitting the transmission data generated by the transmission data generation unit and the display control information flag generated by the generation unit.
(3) The encoding device of (1) or (2), wherein
   the first frame rate is N (N being an integer of 2 or greater) times higher than the predetermined frame rate, and
   the display control information contains information indicating N.
(4) The encoding device of any of (1) through (3), wherein the display control information contains method information indicating whether the images are progressive images or whether the images are interlaced images.
(5) The encoding device of any of (1) through (4), wherein the display control information contains a decode flag indicating whether the non-base images encoded by the encoding unit are to be decoded.
(6) The encoding device of any of (1) through (5), wherein the display control information contains pair information indicating whether the non-base images are the images that form the same frame images as the base images.
(7) The encoding device of any of (1) through (6), wherein the display control information contains a display flag indicating whether the base images are to be displayed.
(8) The encoding device of any of (1) through (7), wherein the display control information contains coding unit information indicating whether the base images have been encoded by the frame or whether the base images have been encoded by the field.
(9) An encoding method including:
   an encoding step of encoding images having a predetermined frame rate among images having a first frame rate as base images, and encoding the images other than the base images among the images having the first frame rate as non-base images by referring to the base images;
   a generation step of generating display control information to be used to display the base images and the non-base images as images having a second frame rate equal to or lower than the first frame rate; and
   a transmission step of transmitting the base images and the non-base images encoded by the processing in the encoding step, and the display control information generated by the processing in the generation step,
   the steps being carried out by an encoding device.
(10) A decoding device including:
   a reception unit that receives base encoded data obtained as a result of encoding of images having a predetermined frame rate as base images among images having a first frame rate, non-base encoded data obtained as a result of encoding of the images other than the base images as non-base images by referring to the base images, and display control information to be used to display the base images and the non-base images as images having a second frame rate equal to or lower than the first frame rate; and
   a decoding unit that generates the base images by decoding the base encoded data received by the reception unit, and decodes the non-base encoded data received by the reception unit by using the display control information received by the reception unit and referring to the generated base images.
(11) The decoding device of (10), further including
   an extraction unit that extracts the base encoded data, the non-base encoded data, and the display control information from transmission data formed with the base encoded data, the non-base encoded data, and the display control information, the transmission data being received by the reception unit,
   the reception unit receiving the transmission data and a display control information flag indicating whether the display control information is contained in the transmission data,
   the extraction unit extracting the base encoded data, the non-base encoded data, and the display control information from the transmission data received by the reception unit based on the display control information flag indicating that the display control information is contained in the transmission data, the display control information flag being received by the reception unit,
   the decoding unit generating the base images by decoding the base encoded data extracted by the extraction unit, and decoding the non-base encoded data extracted by the extraction unit by using the display control information extracted by the extraction unit and referring to the generated base images.
(12) The decoding device of (10) or (11), wherein
   the first frame rate is N (N being an integer of 2 or greater) times higher than the predetermined frame rate,
   the display control information contains information indicating N, and
   the decoding unit determines the second frame rate to be a frame rate M (M being an integer not smaller than 2 and not greater than N) times higher than the predetermined frame rate based on the information indicating N, determines data to be decoded among the non-base encoded data based on the second frame rate, and decodes the data to be decoded.
(13) The decoding device of any of (10) through (12), wherein
   the display control information contains method information indicating whether the images are progressive images or whether the images are interlaced images, and
   the decoding unit determines the second frame rate based on the method information, determines the data to be decoded among the non-base encoded data based on the second frame rate, and decodes the data to be decoded.
(14) The decoding device of (10) or (11), wherein
   the display control information contains a decode flag indicating whether the non-base encoded data is to be decoded, and
   the decoding unit decodes non-base encoded data corresponding to the decode flag indicating that the non-base encoded data is to be decoded by referring to the base images.
(15) The decoding device of any of (10) through (14), further including
   a display control unit that causes the base images and the non-base images to be displayed as the images having the second frame rate based on the display control information received by the reception unit, the base images and the non-base images being obtained as a result of the decoding performed by the decoding unit.
(16) The decoding device of (15), wherein
   the display control information contains pair information indicating whether the non-base images are images that form the same frame images as the base images, and
   the display control unit determines displaying order of the base images and the non-base images as the images having the second frame rate based on the pair information.
(17) The decoding device of (15) or (16), wherein
   the display control information contains a display flag indicating whether the base images are to be displayed, and
   the display control unit causes the base images and the non-base images to be displayed as the images having the second frame rate, the base images corresponding to the display flag indicating that the base images are to be displayed.
(18) The decoding device of any of (15) through (17), wherein
   the display control information contains coding unit information indicating whether the base images have been encoded by the frame or the base images have been encoded by the field, and
   the display control unit causes the base images and the non-base images to be displayed as the images having the second frame rate based on the coding unit information, the images having the second frame rate being image of the units indicated by the coding unit information.
(19) A decoding method including:
   a reception step of receiving base encoded data obtained as a result of encoding of images having a predetermined frame rate as base images among images having a first frame rate, non-base encoded data obtained as a result of encoding of the images other than the base images as non-base images by referring to the base images, and display control information to be used to display the base images and the non-base images as images having a second frame rate equal to or lower than the first frame rate; and
   a decoding step of generating the base images by decoding the base encoded data received by the processing in the reception step, and decoding the non-base encoded data received by the processing in the reception step by using the display control information received by the processing in the reception step and referring to the generated base images,
   the steps being carried out by a decoding device.

### REFERENCE SIGNS LIST

52 TV transmitter, 53, 54 TV receivers, 61 Base encoder, 62 Non-base encoder, 71 Base decoder, 72 Non-base decoder, 81 Decoder, 102 SEI generation unit, 103 NAL generation unit, 106 Antenna, 121 Antenna, 124 NAL filter, 127 Display control unit, 141 Antenna, 146 Display control unit

## Claims

1. An encoding device comprising:
an encoding unit configured to encode an image having a predetermined frame rate among images having a first frame rate as a base image, and encode an image other than the base image among the images having the first frame rate as a non-base image by referring to the base image;
a generation unit configured to generate display control information to be used to display the base image and the non-base image as images having a second frame rate equal to or lower than the first frame rate; and
a transmission unit configured to transmit the base image and the non-base image encoded by the encoding unit, and the display control information generated by the generation unit.

2. The encoding device according to claim 1, further comprising
a transmission data generation unit configured to generate transmission data containing the base image and the non-base image encoded by the encoding unit and the display control information generated by the generation unit,
the generation unit generating the display control information and a display control information flag indicating whether the display control information is contained in the transmission data,
the transmission unit transmitting the transmission data generated by the transmission data generation unit and the display control information flag generated by the generation unit.

3. The encoding device according to claim 1, wherein
the first frame rate is N (N being an integer of 2 or greater) times higher than the predetermined frame rate, and
the display control information contains information indicating N.

4. The encoding device according to claim 1, wherein the display control information contains method information indicating whether the images are progressive images or whether the images are interlaced images.

5. The encoding device according to claim 1, wherein the display control information contains a decode flag indicating whether the non-base image encoded by the encoding unit is to be decoded.

6. The encoding device according to claim 1, wherein the display control information contains pair information indicating whether the non-base image is an image that forms the same frame image as the base image.

7. The encoding device according to claim 1, wherein the display control information contains a display flag indicating whether the base image is to be displayed.

8. The encoding device according to claim 1, wherein the display control information contains coding unit information indicating whether the base image has been encoded by the frame or whether the base image has been encoded by the field.

9. An encoding method comprising:
an encoding step of encoding an image having a predetermined frame rate among images having a first frame rate as a base image, and encoding an image other than the base image among the images having the first frame rate as a non-base image by referring to the base image;
a generation step of generating display control information to be used to display the base image and the non-base image as images having a second frame rate equal to or lower than the first frame rate; and
a transmission step of transmitting the base image and the non-base image encoded by the processing in the encoding step, and the display control information generated by the processing in the generation step,
the steps being carried out by an encoding device.

10. A decoding device comprising:
a reception unit configured to receive base encoded data obtained as a result of encoding of an image having a predetermined frame rate as a base image among images having a first frame rate, non-base encoded data obtained as a result of encoding of an image other than the base image as a non-base image by referring to the base image, and display control information to be used to display the base image and the non-base image as images having a second frame rate equal to or lower than the first frame rate; and
a decoding unit configured to generate the base image by decoding the base encoded data received by the reception unit, and decode the non-base encoded data received by the reception unit by using the display control information received by the reception unit and referring to the generated base image.

11. The decoding device according to claim 10, further comprising
an extraction unit configured to extract the base encoded data, the non-base encoded data, and the display control information from transmission data formed with the base encoded data, the non-base encoded data, and the display control information, the transmission data being received by the reception unit,
the reception unit receiving the transmission data and a display control information flag indicating whether the display control information is contained in the transmission data,
the extraction unit extracting the base encoded data, the non-base encoded data, and the display control information from the transmission data received by the reception unit based on the display control information flag indicating that the display control information is contained in the transmission data, the display control information flag being received by the reception unit,
the decoding unit generating the base image by decoding the base encoded data extracted by the extraction unit, and decoding the non-base encoded data extracted by the extraction unit by using the display control information extracted by the extraction unit and referring to the generated base image.

12. The decoding device according to claim 10, wherein
the first frame rate is N (N being an integer of 2 or greater) times higher than the predetermined frame rate,
the display control information contains information indicating N, and
the decoding unit determines the second frame rate to be a frame rate M (M being an integer not smaller than 2 and not greater than N) times higher than the predetermined frame rate based on the information indicating N, determines data to be decoded among the non-base encoded data based on the second frame rate, and decodes the data to be decoded.

13. The decoding device according to claim 10, wherein
the display control information contains method information indicating whether the images are progressive images or whether the images are interlaced images, and
the decoding unit determines the second frame rate based on the method information, determines the data to be decoded among the non-base encoded data based on the second frame rate, and decodes the data to be decoded.

14. The decoding device according to claim 10, wherein
the display control information contains a decode flag indicating whether the non-base encoded data is to be decoded, and
the decoding unit decodes non-base encoded data corresponding to the decode flag indicating that the non-base encoded data is to be decoded by referring to the base image.

15. The decoding device according to claim 10, further comprising
a display control unit configured to cause the base image and the non-base image to be displayed as the images having the second frame rate based on the display control information received by the reception unit, the base image and the non-base image being obtained as a result of the decoding performed by the decoding unit.

16. The decoding device according to claim 15, wherein
the display control information contains pair information indicating whether the non-base image is an image that forms the same frame image as the base image, and
the display control unit determines displaying order of the base image and the non-base image as the images having the second frame rate based on the pair information.

17. The decoding device according to claim 15, wherein
the display control information contains a display flag indicating whether the base image is to be displayed, and
the display control unit causes the base image and the non-base image to be displayed as the images having the second frame rate, the base image corresponding to the display flag indicating that the base image is to be displayed.

18. The decoding device according to claim 15, wherein
the display control information contains coding unit information indicating whether the base image has been encoded by the frame or the base image has been encoded by the field, and
the display control unit causes the base image and the non-base image to be displayed as the images having the second frame rate based on the coding unit information, the images having the second frame rate being images of units indicated by the coding unit information.

19. A decoding method comprising:
a reception step of receiving base encoded data obtained as a result of encoding of an image having a predetermined frame rate as a base image among images having a first frame rate, non-base encoded data obtained as a result of encoding of an image other than the base image as a non-base image by referring to the base image, and display control information to be used to display the base image and the non-base image as images having a second frame rate equal to or lower than the first frame rate; and
a decoding step of generating the base image by decoding the base encoded data received by the processing in the reception step, and decoding the non-base encoded data received by the processing in the reception step by using the display control information received by the processing in the reception step and referring to the generated base image,
the steps being carried out by a decoding device.
